(19) Europäisches Patentamt
European Patent Office
Office européen des brevets

(11) **EP 4 020 004 B1**

(12) **EUROPEAN PATENT SPECIFICATION**

(45) Date of publication and mention
of the grant of the patent:
**27.11.2024 Bulletin 2024/48**

(21) Application number: **21217302.5**

(22) Date of filing: **23.12.2021**

(51) International Patent Classification (IPC):
*G01S 7/481* (2006.01)        *G01S 7/48* (2006.01)
*G01S 17/42* (2006.01)        *G01S 17/58* (2006.01)
*G01S 17/931* (2020.01)      *G01S 7/4863* (2020.01)

(52) Cooperative Patent Classification (CPC):
**G01S 7/4817; G01S 7/4808; G01S 7/4863;
G01S 17/42; G01S 17/58; G01S 17/931**

(54) **OBJECT DETECTOR, SENSING APPARATUS, AND MOBILE OBJECT**

OBJEKTDETEKTOR, MESSVORRICHTUNG UND MOBILES OBJEKT

DÉTECTEUR D'OBJET, APPAREIL DE DÉTECTION ET OBJET MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.12.2020 JP 2020217320
21.12.2021 JP 2021207439**

(43) Date of publication of application:
**29.06.2022 Bulletin 2022/26**

(73) Proprietor: **Ricoh Company, Ltd.
Tokyo 143-8555 (JP)**

(72) Inventors:
• **SHIMOKAWA, Tatsuya**
  **Tokyo, 143-8555 (JP)**
• **NAKAMURA, Tadashi**
  **Tokyo, 143-8555 (JP)**
• **UENO, Tsuyoshi**
  **Tokyo, 143-8555 (JP)**

(74) Representative: **J A Kemp LLP
80 Turnmill Street
London EC1M 5QU (GB)**

(56) References cited:
**US-A1- 2019 285 734    US-A1- 2020 249 324**

**Description**

BACKGROUND

Technical Field

The present disclosure relates to an object detector, a sensing apparatus, and a mobile object.

Related Art

In the related art, an optical scanner that deflects a light beam to scan an irradiation region, an object detector that emits a laser beam to detect the presence or absence of an object and a distance to the object, and a sensing apparatus using the object detector are known. Such a device or apparatuses may be referred to as a light detection and ranging (LiDAR) device or a laser imaging detection and ranging (LiDAR) device.

The LiDAR detects, for example, the presence or absence of an object in front of a running vehicle (mobile object) and a distance to the object. Specifically, the LiDAR detects irradiates an object with the laser beams emitted from the light source and detects light reflected or scattered (at least one of reflected or scattered) from the object by a light detector to detect the presence or absence of an object and a distance to the object in a desired range, and detecting.

A measurement device, which is disclosed in Japanese Unexamined Patent Application Publication No. 2018-151278, published as JP2018151278A, detects a distance to an object by emitting laser light beam to the object and receiving light returned from the object by a photosensor. Hereinafter, the laser light returned from the object may be referred to as "returned light" or a "returned light beam". The measurement device includes a light emitter that emits laser light beam and an optical element that transmits the laser beam emitted from the light emitter and reflects the returned light passed through a predetermined region including an optical path of the laser beam so that the light receiver receives the returned light. The measurement device also includes a concave mirror configured to reflect the laser beam emitted from the light emitter toward an optical scanner of micro electro mechanical systems (MEMS, MEMS mirror) and condense the returned light from the optical scanner on an optical element.

Japanese Unexamined Patent Application Publication No. 2018-151278 scans with laser beams by the optical scanner and receives light reflected or scattered from the object by light receiver through the optical scanner to detect information such as the presence or absence of the object in a desired range and a distance to the object. As described above, since the LiDAR including the optical scanner (i.e., scanning LiDAR) that deflects both the emitted laser beam and the light reflected or scattered from an object (at least one of reflected light or scattered light) can focus laser beams on only a region to be detected, which is advantages in detection accuracy and range of distance. In addition, since a detectable region by the detector can be minimized, the size of the detecting device can be easily reduced, which is advantageous in terms of cost.

An object detecting apparatus, which is disclosed in Japanese Unexamined Patent Application Publication No. 2015-2126472, published as JP2015212647A, scans with light emitted from a light source by a light deflector. If an object is present in the scanning region, the object detecting apparatus receives the returned light reflected by the object through an imaging optical system. In the object detecting apparatus, the light deflector includes a rotating mirror having two reflecting surfaces that rotate around rotation axes.

An apparatus, which includes a light emitting unit, a light receiving unit, a control unit, and a processing unit and obtains distance image data indicating a distribution of distances to an object present in an observation range, is disclosed in Japanese Unexamined Patent Application Publication No. 2011-089874, published as JP2011089874A. The light emitting unit includes a light beam emitting device, a mirror that reflects a light beam emitted from the light beam emitting device, a first swing mechanism that swings the mirror around a first axis, and a second swing mechanism that swings the mirror around a second axis. The mirror is formed by a MEMS mirror.

Japanese Unexamined Patent Application Publications No. 2018-151278, No. 2015-212647, and No. 2011-089874 use a common method of scanning a desired angle range (i.e., effective scanning region) with light beam. The light scanning unit according to Japanese Unexamined Patent Application Publication No. 2018-151278 and the mirror according to Japanese Unexamined Patent Application Publication No. 2011-089874 are each composed of a MEMS mirror, and the light deflector (optical deflector) according to Japanese Unexamined Patent Application Publication No. 2015-212647 is composed of a rotating mirror having two reflecting surfaces that rotate around rotation axes. In addition, various other scanning mechanisms are known.

As a result of diligent research on scanning mechanisms disclosed in Japanese Unexamined Patent Application Publications No. 2018-151278, No. 2015-21264, and No. 2011-089874, the present inventors have found the technical problems below. Detection accuracy may decrease due to an advance movement of a light deflector during a round trip it takes for light to undergo the round trip to an object at a speed of light. Such an advance movement of the light deflector increases with a higher scanning speed of the scanning mechanism or the light deflector.

The round trip time from the light deflector to an object t is obtained by an equation below.

$$t = 2L/c$$

where L is a distance to the object, and c is the speed of light. For example, when L is 300 m, t is 2 μs. In the MEMS mirror, an angular velocity of scanning becomes maximum at a center of the scanning, when a resonance frequency is 2,000 Hz and an amplitude is 25° (i.e., mechanical deflection angle is ±25°). An advance movement in a scanning direction reaches, for example, 0.6° as a deflection angle of the MEMS mirror, which is equivalent to 1.3° of an optical angle of view, when t is 2 μs. (The light deflector as the MEMS mirror is leading, for example, by a deflector angle of 0.6°, which is equivalent to an optical angle of view 1.3° double of the deflection angle, when t is 2 μs). As described above, when the round trip time from the light emission to light reception takes 2 μs, the advance movement of the MEMS mirror (the light deflector) is 1.3° in the scanning direction during the light projecting and the light receiving. If settings of an angle of view for each of the projecting light and receiving light are not appropriate, an accuracy of an object detection decreases (in an extreme case, an object cannot be detected), because light cannot be received due to an insufficient angle of view. US 2020/249324 A1 discloses distributing LIDAR system components. US 2019/285734 A1 discloses a detection system with configurable range and field of view.

SUMMARY

In view of the above circumstances, embodiments of the present invention aim at providing an object detector, a sensing apparatus incorporating the object detector that enables highly accurate object detection, and a mobile object incorporating the sensing apparatus.
The invention is defined in the independent claims. Further aspects and preferred embodiments are defined in the dependent claims. Any aspects, embodiments and examples of the present disclosure which do not fall under the scope of the appended claims do not form part of the invention and are merely provided for illustrative purposes.
According to the present disclosure, an object detector, a sensing apparatus incorporating the object detector, and a mobile object incorporating the sensing apparatus achieve highly accurate object detection.

BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:

FIG. 1 is a schematic view of a configuration of an optical scanner according to the first embodiment;
FIG. 2 is a schematic view of a configuration of an object detector according to the first embodiment;
FIG. 3 is a functional block diagram of an object detector that measures a distance by the TOF;
FIG. 4 is an illustration of a distance L between the object to a target of interest;
FIG. 5A is a schematic view of an example of an angle of view of a light receiving optical element;
FIG. 5B is a schematic view of another example of an angle of view of a light receiving optical element;
FIG. 6 is an illustration of an example of a spread angle of a light beam in a detection region;
FIG. 7 is a schematic view of a difference in an angle of view between projecting light and receiving light by deflection of a light deflector;
FIG. 8A is an illustration of an example of an arrangement of light receiving pixels without reflected beam shift;
FIG. 8B is an illustration of an example of an arrangement of light receiving pixels with reflected beam shift;
FIG. 9A is an illustration of an example of an arrangement of light receiving pixels with an even number with minimum width of reflected beam;
FIG. 9B is an illustration of an example of an arrangement of light receiving pixels with an even number with maximum width of reflected beam;
FIG. 10A is an illustration of an example of an arrangement of light receiving pixels with an odd number with minimum width of reflected beam;
FIG. 10B is an illustration of an example of an arrangement of light receiving pixels with an odd number with maximum width of reflected beam;
FIG. 11 is an illustration of a change in an amount of received light due to a horizontal shift of a reflected light beam as viewed from the Z-axis;
FIG. 12 is an illustrating of a change in an amount of received light due to a horizontal shift of a reflected light beam as viewed from the X-axis;

FIG. 13 is a graph of a relation between a focal length and a detection limit of a change in an amount of received light;

FIG. 14 is an illustration of an arrangement of light receiving pixels according to a modified embodiment;

FIG. 15 is a graph of a relation between a measurement distance and an amount of horizontal shift on a light receiving element;

FIG. 16 is a diagram of a configuration of a sensing apparatus;

FIG. 17 is a diagram of another configuration of a sensing apparatus; and

FIG. 18 is an illustration of a vehicle including a sensing apparatus.

The accompanying drawings are intended to depict embodiments of the present invention and should not be interpreted to limit the scope thereof, which is solely defined by the claims. The accompanying drawings are not to be considered as drawn to scale unless explicitly noted. Also, identical or similar reference numerals designate identical or similar components throughout the several views.

DETAILED DESCRIPTION

Referring now to the drawings, embodiments of the present disclosure are described below. As used herein, the singular forms "a," "an," and "the" are intended to include the plural forms as well, unless the context clearly indicates otherwise.

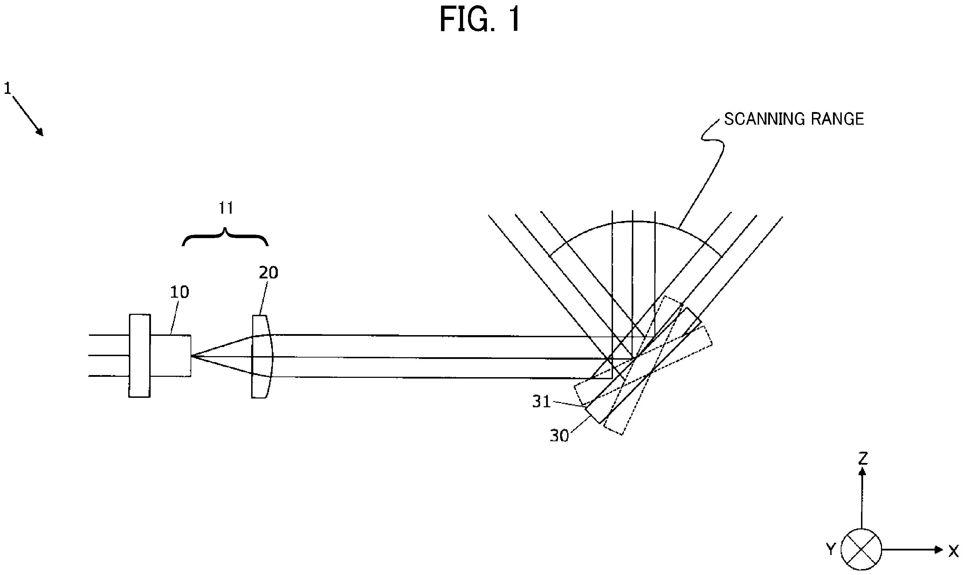

An optical scanner 1 according to the present embodiment is described in detail with reference to FIGs. 1 to 13. In the following description, an X-axis direction (X-direction), a Y-axis direction (Y-direction), and a Z-axis direction (Z-direction) are based on directions indicated by arrows in the drawings (FIGs. 1, 2, 8, 9, 10, 11, 12, and 14). The X-direction, the Y-direction, and the Z-direction are orthogonal to each other in a three-dimensional space (i.e., Cartesian coordinate system or rectangular coordinate system).

FIG. 1 is a schematic view of a configuration of an optical scanner according to the first embodiment.

The optical scanner 1 includes a light source 10, a light projecting (throwing) optical element 20, and a light deflector 30 (scanning mirror, optical deflector).

The light source 10 emits a light beam diverging at a predetermined angle. The light source 10 is, for example, a semiconductor laser (laser diode (LD)). Alternatively, the light source 10 may be a vertical cavity surface emitting laser (VCSEL) or a light emitting diode (LED). As described above, there is a latitude in configurations of the light source 10, and various designs (modifications) are possible.

The light projecting optical element 20 shapes a light beam emitted from the light source 10. Specifically, the light projecting optical element 20 shapes a light beam incident thereon while diverging at a predetermined angle into substantially parallel light. The light projecting optical element 20 is, for example, a coaxial aspherical lens that collimates a divergent light beam into substantially parallel light. In FIG. 1, the light projecting optical element 20 is one lens, but the light projecting optical element 20 may include multiple lenses.

The light source 10 and the light projecting optical element 20 constitute a light source unit 11 that emits a light beam.

The light deflector 30 has a deflection surface 31 that deflects the light beam, which is emitted from the light projecting optical element 20. Specifically, the light deflector 30 deflects and scans the light beam, which is emitted by the light source 10 and the light projecting optical element 20 in the X-direction, to scan a predetermined scanning range on a X-Z plane including the X-direction and the Z-direction. A scanning range by the light deflector 30 is set, for example, by changing an angle of the deflection surface 31 by vibration or rotation. In FIG. 1, a reference position of the light deflector 30 (deflection surface 31) in the scanning range described above is depicted by a solid line, and the scanning positions (e.g., both ends of the scanning range) of the light deflector 30 (deflection surface 31) is depicted by broken lines. As described above, the light deflector 30 deflects the light beam emitted from the light source 10 and the light projecting optical element 20 (i.e., light source unit 11) to scan an object in the detection region with the light beam deflected by the light deflector 30. Hereinafter, the "detection region" includes a region between the light projecting optical element 20 and the light deflector 30 and a region following deflection and scan by the light deflector 30.

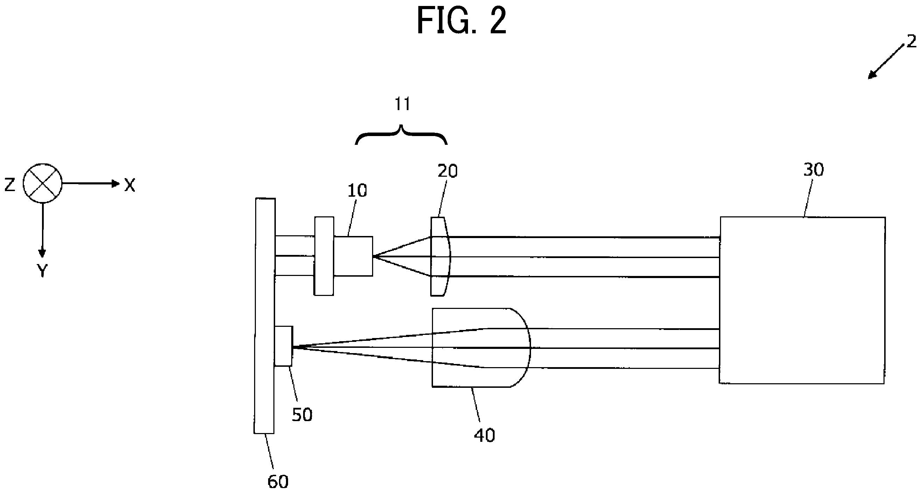

FIG. 2 is a schematic view of a configuration of an object detector according to the first embodiment. The object detector 2 includes a light receiving optical element 40, a light receiving element 50, and a drive substrate 60 in addition to the light source 10, the light projecting optical element 20, and the light deflector 30 according to the optical scanner 1.

When an object is present in a region to be scanned with the light beam deflected by the light deflector 30, the light beam returned from the object through at least one of reflection or scatter on the object. The returned light beam through at least one of reflection and scatter on the object is deflected by the light deflector 30 in a predetermined range on a X-Y plane and passes through the light receiving optical element 40 and reaches the light receiving element 50. The light receiving element 50 receives the returned light beam deflected by the light deflector 30 to scan the object with the light beam and through at least one of reflection or scatter on the object in the detection region via the light deflector 30 and the light receiving optical element 40. The drive substrate 60 controls the driving of the light source 10 and the light receiving element 50.

The light receiving optical element 40 is one of, for example, a lens system, a mirror system, and other various configurations that collects light onto the light receiving element 50, but the configuration of the light receiving optical element 40 is not limited thereto. There is a latitude in the configuration of the light receiving optical element 40.

The light receiving element 50 is, for example, a photo diode (PD), an APD (Avalanche Photo Diode), a single photo avalanche diode (SPAD) of a Geiger mode APD, or a CMOS imaging element having function of a time of flight (TOF) calculation for each pixel. The CMOS image element is also referred to as a TOF sensor.

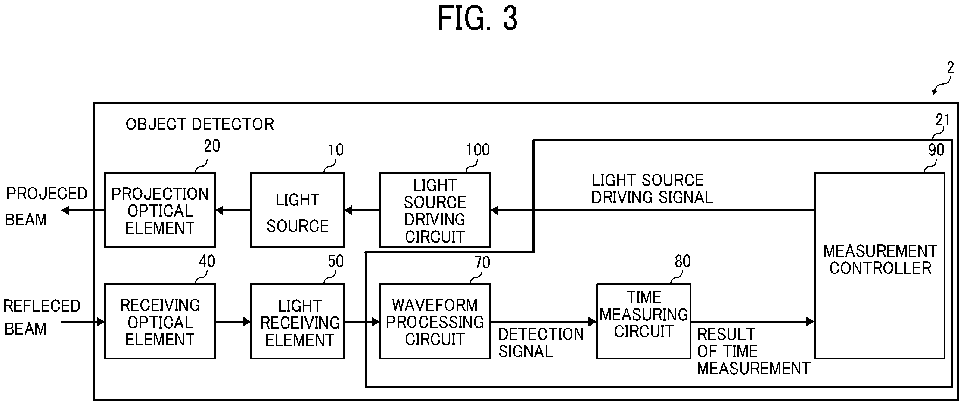

FIG. 3 is a functional block diagram of the object detector 2 that measures a distance by the TOF. As illustrated in FIG. 3, the object detector 2 includes a waveform processing circuit 70, a time measuring circuit 80, a measurement controller 90, and a light source driving circuit 100 for coupling the light source 10 and the light receiving element 50.

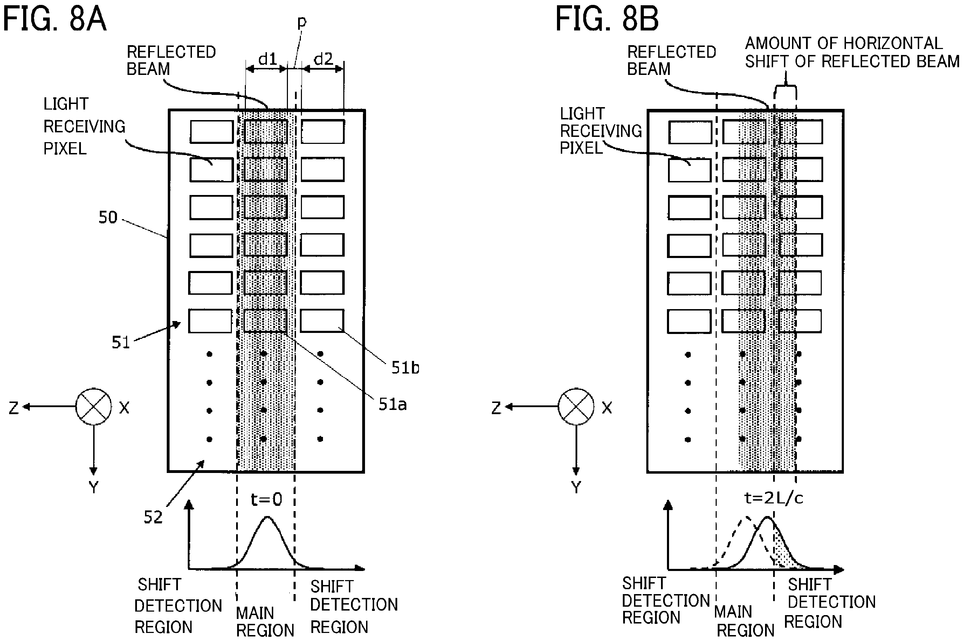

The waveform processing circuit 70 applies predetermined waveform processing to the light beam received by the light receiving element 50 and outputs a detection signal. The time measuring circuit 80 measures time from the timing (a light emission time) at which a light beam emitted from the light source 10 to the timing (an object detection time) at which the object is detected by the light receiving element 50 based on the detection signal outputted from the waveform processing circuit 70 and outputs a result of the time measurement. The measurement controller 90 detects information on an object presence in the detection region based on the result of the time measurement (i.e., a period of time from the light beam emission by the light source 10 to the object detection by the light receiving element 50) inputted from the time measuring circuit 80. The measurement controller 90 works as a part of object detecting unit 21 that detects the returned light beam through at least one of reflection or scatter on the object in the detection region and determines the timing at which the object is detected by the light receiving element 50 (an object detection time). The object detecting unit 21 calculates an amount change in a deflection angle of the light deflector 30 from a distribution of the amount of light received by each light receiving pixel 51 (see FIG. 8) of the light receiving element 50. In other words, the object detecting unit 21 generates a detection signal based on an amount of light received by the light receiving element 50; determines an object detection time based on a light emission time of the light source unit 11 and the light receiving signal; and detects the object based on the object detection time and a light emission time of the light source unit 11. In the present embodiment, each of the drive substrate 60, the waveform processing circuit 70, the time measuring circuit 80, and the measurement controller 90 works as a part of an object detecting unit 21. In addition, the measurement controller 90 outputs a light source drive signal based on the information of the detected object. The light source drive circuit 100 controls light emission of the light source 10 based on the light source drive signal from the measurement controller 90.

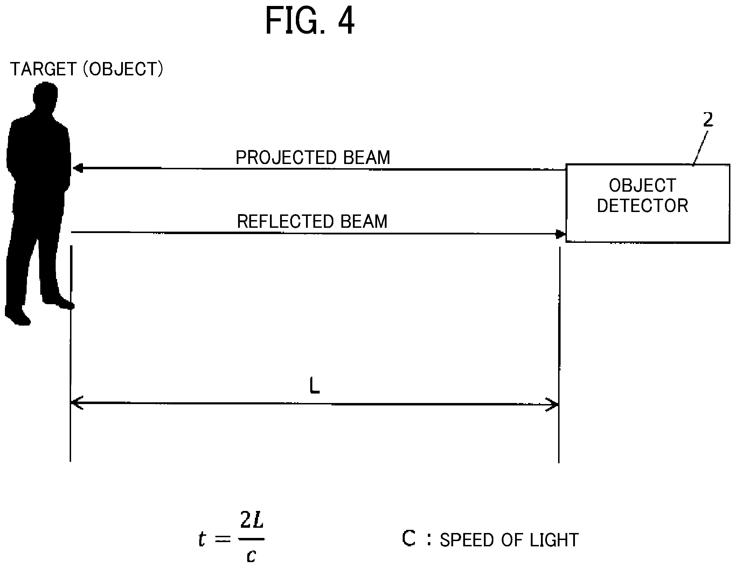

FIG. 4 is an illustration of a distance L between the object detector 2 and an object of interest. For example, a distance 2L for the round trip to the object is calculated by multiplying t by c (i.e., 2L = t × c), where t is the round trip time from the timing at which a light beam (a pulse) is emitted by the light source 10 to the timing at which the light beam returned from the object is received by the light receiving element 50, which is measured by the waveform processing circuit 70 and the time measuring circuit 80, and c is the speed of light (i.e., the light beam). Utilizing the fact that a distance from the light source 10 to the object and a distance from the object to the light receiving element 50 are regarded as substantially the equal to each other, the half distance of the obtained round trip 2L (i.e., L) is calculated as the distance from the object detector 2 to the object. The following relation is established among the distance L between the object detector 2 and the object o interest, the speed of light c, and the time: t is equal to 2L/c (i.e., t = 2L/c).

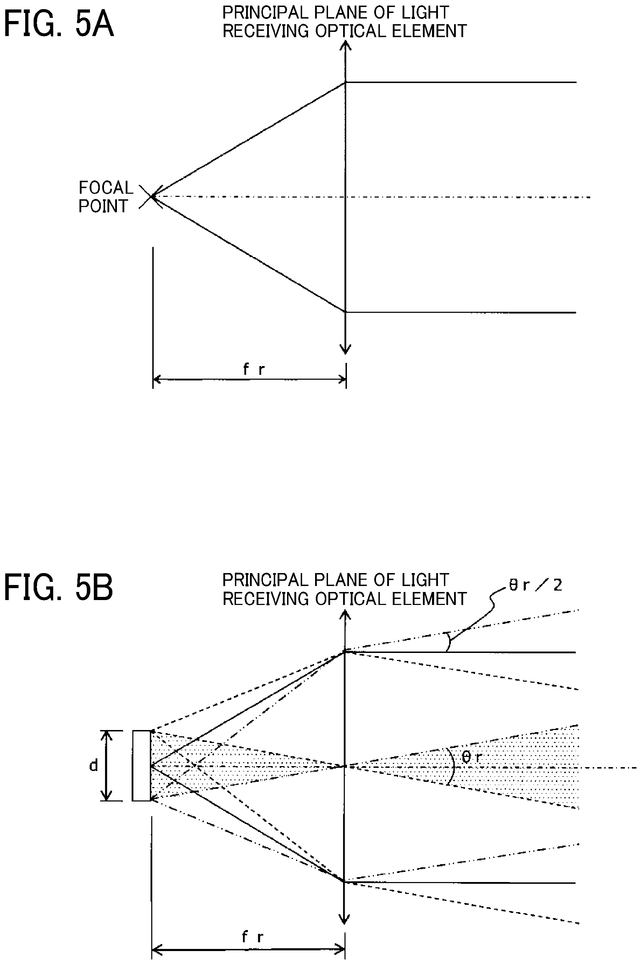

FIGs. 5A and 5B are illustrations of an angle of view $\theta_r$ of the light receiving element 50 according to an embodiment of the present invention. When the returned light beam through at least one of reflection or scatter on the object is received by the light receiving element 50, ideally, a focal point is formed at a position with a focal length $f_r$ of the light receiving optical element 40 from a principal plane of the light receiving optical element 40 as illustrated in FIG. 5A. The light receiving element 50 actually has an area on the light receiving surface. In consideration of the area of the light receiving surface, the angle of view $\theta_r$ of light receiving of the light receiving element 50 is given the expression below.

$$\theta_r = 2 \tan^{-1} \frac{d}{2f_r}$$

where $f_r$ is the focal length of the light receiving optical element 40, and d is the size of the light receiving element 50 in the scanning direction. Thus, the angle of view $\theta_r$ for light receiving of the light receiving element 50 is defined by the focal length $f_r$ of the light receiving element 50 and the size d of the light receiving element 50 in the scanning direction.

A shape of the light receiving element 50 (a light receiving surface of the light receiving element 50) may be, for example, a square, a rectangle, a circle, or an ellipse. In a case where a shape of the light receiving element 50 (a light receiving surface of the light receiving element 50) is a square, the length of one side of the square or a half thereof is the size d of the light receiving element 50 in the scanning direction. In a case where a shape of the light receiving element 50 (a light receiving surface of the light receiving element 50) is a rectangle, the length of the longer side or the shorter side of the rectangle or a half thereof is the size d of the light receiving element 50 in the scanning direction. In a case where a shape of the light receiving element 50 (a light receiving surface of the light receiving element 50) is a circle, the diameter or radius of the circle is the size d of the light receiving element 50 in the scanning direction. In a case where a shape of the light receiving element 50 (the light receiving surface of the light receiving element 50) has an elliptical shape, the major axis or the minor axis of the elliptical shape or a half thereof is the size d of the light receiving element 50 in the scanning direction.

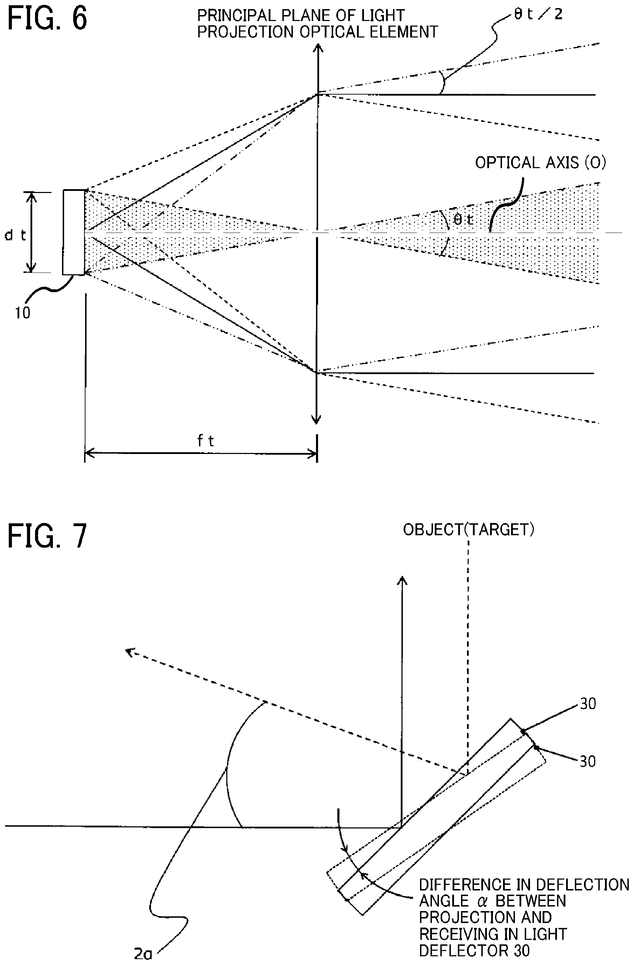

FIG. 6 is an illustration of an example of a spread angle $\theta_t$ of the light beam in a detection region. In a case where the light source 10 is regarded as a point light source, and an optical path length from a light emitting point of the light source 10 to a principal plane of the light projecting optical element 20 is a focal length ft of the light projecting optical element 20, a light beam emitted from the light source 10 and shaped by the light projecting optical element 20 becomes substantially parallel light.

When the light source 10 having a higher output power is used to detect an object at a longer distance, the output power is generally increased by increasing the area (e.g., an area defined by the size dt in FIG. 6) of the light emitting region of the light source 10. The optical path length from the light emitting region of the light source 10 to the principal plane of the light projecting optical element 20 is arranged at the focal length ft of the light projecting optical element 20; however the light beam outputted from the light source 10 and shaped by the light projecting optical element 20 does not become parallel light (FIG. 6) because the light emitting region of the light source 10 has an actual area (dt).

In FIG. 6, a light beam emitted from the center of the light emitting region of the light source10 are depicted by a solid line, a light beam emitted from one end (i.e., upper end) of the light emitting region of the light source 10 is depicted by a broken line, and a light beam emitted from the other end (i.e., lower end) of the light emitting region of the light source 10 is depicted by a two-dot chain line. As illustrated in FIG. 6, since the center of the light source 10 is arranged on the optical axis O of the light projection optical element 20, and the center of the light source 10 is coincident with at the focal point of the light projection element 20, the light beam emitted from the center of the light emitting region of the light source 10 is formed into substantially parallel a light beam by the light projecting optical element 20. In contrast, the light beams emitted from one end and the other end of the light emitting region of the light source 10 have components in which a diameter of the light beam spread passing through the light projecting optical element 20. One component of the light beams (depicted by the broken line and the two-dot chain line) emitted from one end and the other end of the light emitting region of the light source 10 go straight passing through the principal plane of the light projecting optical element 20 across the optical axis. Since the light beam become substantially parallel light by passing through the light projecting optical element 20, the light beams incident on the edges of the light projecting optical element 20 are also emitted at substantially the same angle. As a result, the light beam spreads at an angle $\theta_t$ or $\theta_t /2$ (FIG. 6), which is a feature of the optical system. Because of the feature of the optical system, as the size dt of the light emitting region of the light source 10 increases, the spread angle of the projecting light beam $\theta_t$ or $\theta_t /2$ of the projecting light beam also increases.

For example, when the round trip time it takes for light to undergo the round trip to the object at the speed of light is short with respect to the scanning speed of the light deflector 30, and when the angle of view $\theta_r$ of the light receiving element 50 is equal to or larger than the spread angle $\theta_t$ of the projecting light beam in the detection region (i.e., $\theta_r \geq \theta_t$), the light receiving element 50 can efficiently receive without the loss of some amount of light returned from the object through at least one of reflection or scatter on the object, without losing some amount of light. In order to facilitate adjustment of the optical system or increase robustness against error factors such as aging, the angle of view of light receiving is usually set to be larger by an amount corresponding to the adjustment residual error or change.

The present inventors have found through studies that, since the light deflector moves in advance while the light beam travels for a round trip to the object at the speed of light, the detection accuracy may be deteriorated, which depends on the scanning speed of the scanning mechanism.

FIG. 7 is an illustration of an example of a difference in angles of view between light projected by the light source 10 and the light to be received by the light receiving element 50, due to the deflection of the light deflector 30. In FIG. 7, the light deflector 30 at the deflection angle in projecting light is depicted by a solid line, and the light deflector 30 at a deflection angle in receiving light is depicted d by a broken line. In FIG. 7, an optical path of the light beam projected by the light source 10 before and after entering the light deflector 30 is depicted by solid line, and an optical path of the light beam to be received by the light receiving element 50 before and after entering the light deflector 30 is depicted by broken lines. The incident angle of light on the light deflector 30 is the same between light projected by the light source 10 to an object (or an object of interest) in the detection region and the light returned from the object and to be received by the light receiving element 50. Each difference in a deflection angle of the light deflector 30 is $\alpha$ (degrees) between the deflection angle at which the light deflector 30 receives the projected light and the deflection angle at which the light deflector 30 receives the light returned from the object. When $\alpha$ is doubled in total at the time of light projecting and light receiving, a difference in an angle of view $2\alpha$ is generated by the deflection of the light deflector 30.

As described above, t is equal to 2L/c (i.e., t = 2L/c) as illustrated in FIG. 4, where L is the distance to an object (an object of interest), c is the speed of light, and t is the round trip time to the object. Specifically, L is 300 m, then, t is

2 μs. In the MEMS mirror, an angular velocity of scanning becomes maximum at a center of the scanning, when a resonance frequency is 2,000 Hz and an amplitude is 25° (i.e., mechanical deflection angle is ±25°). An advance movement in a scanning direction, for example, reaches 0.6° as a deflection angle of the MEMS mirror and 1.3°, t is 2 μs. As described above, when the round trip time from the light emission to light reception takes 2 μs, the advance movement of the MEMS mirror is 1.3° in the scanning direction during the light projecting and the light receiving. If settings of an angle of view for each of the projecting light and receiving light are not appropriate, an accuracy of an object detection decreases (in an extreme case, an object cannot be detected), because light cannot be received due to an insufficient angle of view.

The inventors of the present invention have focused on a phenomenon in which the angle of the light deflector 30 changes during the round trip time by light, and conceived the present invention. In the present embodiment, in order to effectively utilize the phenomenon in which the angle of the light deflector 30 changes during the round trip time by light, optical system parameters such as a pixel arrangement of the light receiving element 50 and the focal length are devised so that the shift detection region of the light receiving element 50 can estimate an amount of the beam horizontal shift of the reflected light from the amount of received light.

In the present embodiment, multiple light receiving pixels 51 in the light receiving element 50 are arranged along a predetermined direction in the light receiving element 50. Specifically, multiple light receiving pixels 51 are arranged side by side at different positions in a first direction (i.e., Z-direction) on a plane orthogonal to a propagating direction of the center ray of the light beam. With this arrangement, since multiple light receiving pixels 51 are arranged side by side along a direction (e.g., the Z-direction as the first direction, or the scanning direction of the light deflector 30) of shift of the light beam caused by the high-speed movement of the light deflector 30, any of multiple light receiving pixels 51 reliably receives the light beam. In addition, the detection region estimates the amount of the horizontal shift of the light beam reflected by the light deflector 30 from an amount of received light (i.e., an amount of light received by each light receiving pixel 51). As a result, an accuracy of distance measurement to the object improves while utilizing the phenomenon in which the angle of the light deflector 30 changes during the round trip time by light.

Arrangements of the light receiving pixel 51 are described with reference to FIGs. 8 to 10. FIGs. 8A and 8B are illustrations of an example of an arrangement of the light receiving element 50. In the present embodiment, since the light receiving element 50 uses multiple light receiving pixels 51, the light receiving element 50 widens an angle of view and efficiently receives reflected light. In addition, accuracy of distance measurement is complimented by positively utilizing the fact that the angle of the light deflector 30 advances in the round trip time by light.

In FIG. 8A, a returned light beam through at least one of reflection or scatter on an object reaches the center of the light receiving element 50 (i.e., beam position), in which a distance to the object L (i.e., object distance) is 0, that is, time t is 0 (i.e., L = 0 and t = 0), and a light receiving lens is designed to satisfy the conditions of the beam position, L and t. The reflected light beam slightly shifts in the Z-direction, which is the first direction, on the light receiving element 50 due to the angle change of the light deflector 30, as illustrated in FIG. 8B.

An amount of the shift in the reflected light beam in the Z-direction is referred to as an amount of the horizontal shift. In the present embodiment, a maximum value of the amount of the horizontal shift is regarded as a change in an amount of light incident on the light receiving pixels 51 in the shift detection region, and an angle change of the scanning mirror is estimated from the change in the amount of light. The round trip time to the object by light t is a period from light beam emission by the light source 10 to light beam reception in which the light is reflected by an object by the light receiving element 50. The round trip time to the object by light is obtained by an angle change of the light deflector 30 and a scanning speed (driving frequency). As a result, the object distance L (= ct/2) to be detected is estimated. In addition, the accuracy of distance measurement improves by complementing the accuracy of the distance, for example, by averaging multiple data, together with the information on measured distance based on the original TOF principle.

A specific arrangement of the light receiving element 50 includes a pixel array formed by multiple light receiving pixels 51 arranged along the Y-direction as a main region (i.e., pixel array in the main region) and a pixel array formed by multiple light receiving pixels 51 arranged along the Y-direction as a shift detection region which is shifted from the main region pixel in the Z-direction (i.e., pixel array in the shift detection region). In a scanning condition that the amount of horizontal shift with respect to a size of pixel is within an error, a pixel on which the center of the light beam is incident refers to a main region (main region pixel), a pixel on which the center of the light beam is not incident in the scanning condition described above or a peripheral ray of the light beam is incident refers to a shift detection region (shift detection region pixel). A direction of the horizontal shift of the reflected light beam is reversed between the first leg and the second leg of a round trip in the rotation of the MEMS mirror (i.e., directional switch). Because of the directional switch, the pixel array of shift detection region is symmetrically arranged at both sides of the pixel array in the main region along the Z-direction.

More specifically, multiple light receiving pixels 51 are arranged in a grid pattern along the Z-direction, which is a first direction, and the Y-direction, which is a second direction intersecting the first direction, in a plane orthogonal to the propagating direction of the center ray of the light beam. As described above, the first direction (Z-direction) coincides with the shift direction of the light beam caused by the high-speed movement of the light deflector 30. The second direction (Y-direction) is orthogonal to the first direction. Multiple light receiving pixels 51 are arranged in the grid pattern on the Y-Z plane.

Each light receiving pixel 51 has a shape of a rectangle elongated in the Z-direction on the Y-Z plane. The shape of the light receiving pixel 51 is not limited thereto and can be changed as appropriate. For example, the shape of the light receiving pixel 51 may be a rectangle elongated in the Y-direction.

As illustrated in FIGs. 8A and 8B, multiple light receiving pixels 51 are arranged at a predetermined pitch in the Y-direction which is the shorter-side of the light receiving pixel 51. Multiple light receiving pixels 51 form a pixel array 52 extending linearly along the Y-direction. For example, In FIGs. 8A and 8B, three-pixel arrays 52 are arranged side by side at a predetermined pitch in the Z-direction. In the present embodiment, multiple light receiving pixels 51 are arranged side by side along the Y-direction forming a pixel array 52 that is intermittent in the Y-direction, but the arrangement is not limited thereto. For example, a single light receiving pixel 51 may be used by elongating itself in the Y-direction as a line-shape pixel, and multiple line-shape pixels are arranged side by side at a predetermined pitch in Z-direction forming multiple pixel arrays 52.

Among multiple light receiving pixels 51 arranged side by side in the first direction (Z-direction), two adjacent light receiving pixels 51 are referred to as a first light receiving pixel 51a and a second light receiving pixel 51b. In FIG. 8A, a light receiving pixel in a main region is predetermined to be the first light receiving pixel 51a and a light receiving pixel in a shift detection region is predetermined to be the second light receiving pixel 51b. A distance between the first light receiving pixel 51a and the second light receiving pixel 51b (i.e., pitch) is denoted by p, the size of the first light receiving pixel 51a in the first direction (i.e., Z-direction) is denoted by d1, and the size of the second light receiving pixel 51b in the first direction (i.e., Z-direction) is denoted by d2. In one or more embodiments, a beam width of the light beam (Db) collected by the light receiving optical element 40 satisfies a conditional expression below.

$$Db < d1+d2+p$$

Preferably, the width of the reflected light beam is smaller than the sum of the size of two light receiving pixels 51 adjacent to each other (i.e., d1 and d2) and the distance between them (i.e., p). Thus, any of the light receiving pixels 51 can receive the light beam without waste.

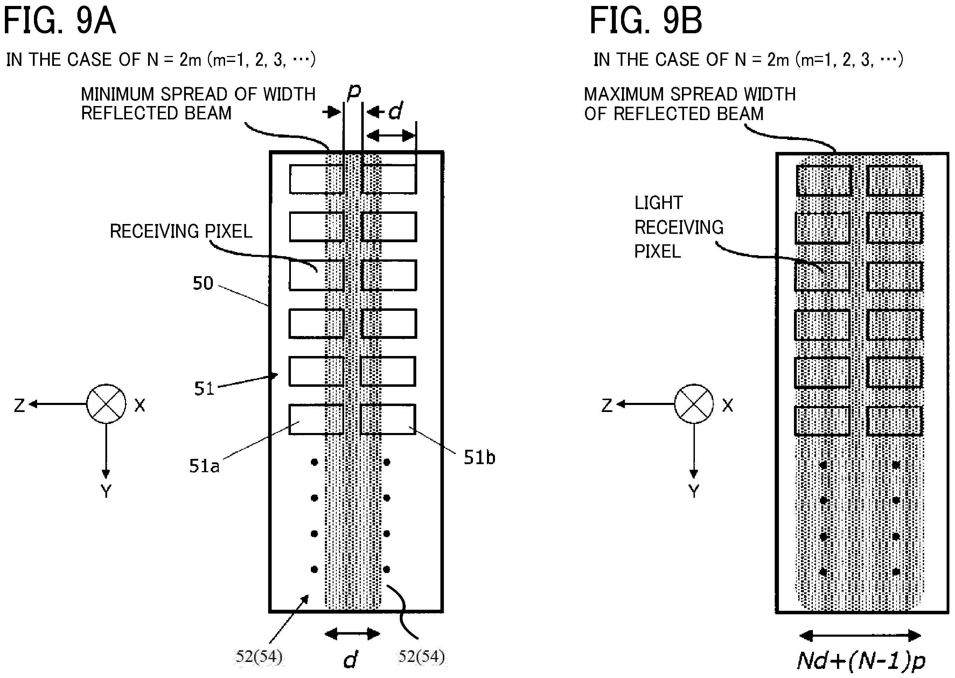

In addition, suitable conditions differ depending on the reference position at which the light receiving element 50 receives a reflected light beam, and the number and the arrangement of pixel arrays 52 in the light receiving element 50 involve different conditions that depend on the presence or absence of the main region line (the pixel array in the main region) on which the center of the light beam is incident. FIGs. 9A and 9B are illustrations of an example of an arrangement of the light receiving element 50 in which the number of pixel arrays 52 is even. When the number of pixel arrays 52 is even, there is no main region at the center of the light receiving element 50, and the amount of the horizontal shift of the reflected light beam is estimated based on an amount of light change of the pixel arrays 52 of the shift detection region (pixel arrays 54 in FIG. 9A). Two- pixel arrays 52 are illustrated in FIGs. 9A and 9B, but the number of the pixel arrays 52 is not limited to two. The number of pixel arrays 52 may be two or more as long as the number is even. In contrast, in FIGs. 8A and 8B, the pixel array 52 arranged in the center of the light receiving element 50 is the main region.

There are conditions to efficiently detect an amount of light change from the arrangements of the pixel arrays 52 with respect to the spread angle of the reflected light beam. When the reflected light beam is formed to be narrower than the size of light receiving pixel 51 (i.e., size of d), which may be the minimum spread angle of the reflected light beam, and horizontally shifted on the pixel, there is a position where the shift direction or the accurate shift position cannot be detected. The relation between a tangential direction of the pixel size d and the projecting light beam is illustrated in FIG. 9A and a spread angle $\theta_t$ of the projecting light beam is given by a mathematical expression below.

$$2 \tan^{-1}\left(\frac{d}{2f_r}\right) < \theta_t$$

When a MEMS mirror is used as the light deflector 30, the angle changes sinusoidally and the angle change $\delta\theta$ at a predetermined time t is not constant. A feature of the angular velocity of the scanning by the light deflector 30 is sinusoidal (i.e., sinusoidal angular velocity of scanning). For example, the angle change $\delta\theta$ at a certain time t' is given by a mathematical expression below,

$$\delta\theta = \left|\left(A\sin\left(t' + \frac{2L}{c}\right)\omega_s\right) - \left(A\sin t'\ \omega_s\right)\right|$$

where c is the speed of light, L is a maximum distance detecting an object, $\omega_s$ is angular velocity of scanning, and A is a maximum mechanical angle of deflection.

In the MEMS mirror, the scanning speed becomes maximum at the scanning center position. When focusing on the portion where the angle becomes 0, the angle change $\delta\theta$ at t=2L/c becomes maximum during a period from -t/2 to t/2, and thus a mathematical expression below is held.

$$\delta\theta = \left| \left( A \sin\left(\frac{L}{c}\omega_s\right) \right) - \left( A \sin\left(-\frac{L}{c}\omega_s\right) \right) \right| = 2A \sin\left(\frac{L}{c}\omega_s\right)$$

When the shift of the optical angle of view is considered, it becomes four times in total in which the shift of the angle of view is optically doubled and further doubled in back and forth of scanning of the MEMS mirror. Thus, the angle change $\delta\theta$ is given by a mathematical expression below.

$$\delta\theta = 8A \sin\left(\frac{L}{c}\omega_s\right)$$

The number of pixel arrays 52 is represented as N = 2m (m is a natural number, e.g., m = 1, 2, 3, ...). When a sum of the spread angle of the projecting light beam $\theta_t$ and the angle change $\delta\theta$ of the scanning mirror is larger than the sum of the width of all pixel arrays 52 (i.e., the width of multiple light receiving pixels 51 in the first direction, N × d) of the light receiving element 50 and the pitch between all pixels (i.e., (N - 1) × p), which may be the maximum reflected light beam spread angle, there is a position where the shift direction or the accurate shift position cannot be detected, when the light receiving pixel 51 is horizontally shifted, as in the minimum case. As illustrated in FIG. 9B, the relation between the tangential direction of the sum of the width N × d of all pixel lines of the light receiving element 50 and the pitch (i.e., (N - 1) × p) between all pixels and the sum of the spread angle of the projecting light beam $\theta_t$ of the projected light beam and the angle change $\delta\theta$ of the scanning mirror is given by a mathematical expression below.

$$\theta_t + 8A \sin\left(\frac{L}{c}\omega_s\right) \leq 2\tan^{-1}\left(\frac{Nd + (N-1)p}{2f_r}\right)$$

When the above equation is modified and arranged, a mathematical expression below is derived.

$$2\tan^{-1}\left(\frac{d}{2f_r}\right) < \theta_t \leq 2\tan^{-1}\left(\frac{Nd + (N-1)p}{2f_r}\right) - 8A \sin\left(\frac{L}{c}\omega_s\right)$$

where $\omega_s$ is a sinusoidal angular velocity of scanning, A is a maximum mechanical deflection angle, L is a maximum detection distance, $f_r$ is a focal length of the light receiving optical element, d is a width of each of the light receiving pixels, p is a pitch between the light receiving pixels, c is the speed of light, $\theta_t$ is a spread angle of projecting light, and N is the number of pixel arrays arranged along a direction in which horizontal deviation occurs in the light receiving element.

As illustrated in FIGs. 9A and 9B, when the main region on which the center of the light beam is incident does not exist, (e.g., N is an even number), the spread angle $\theta_t$ of the projecting light beam is set to satisfy the expression above.

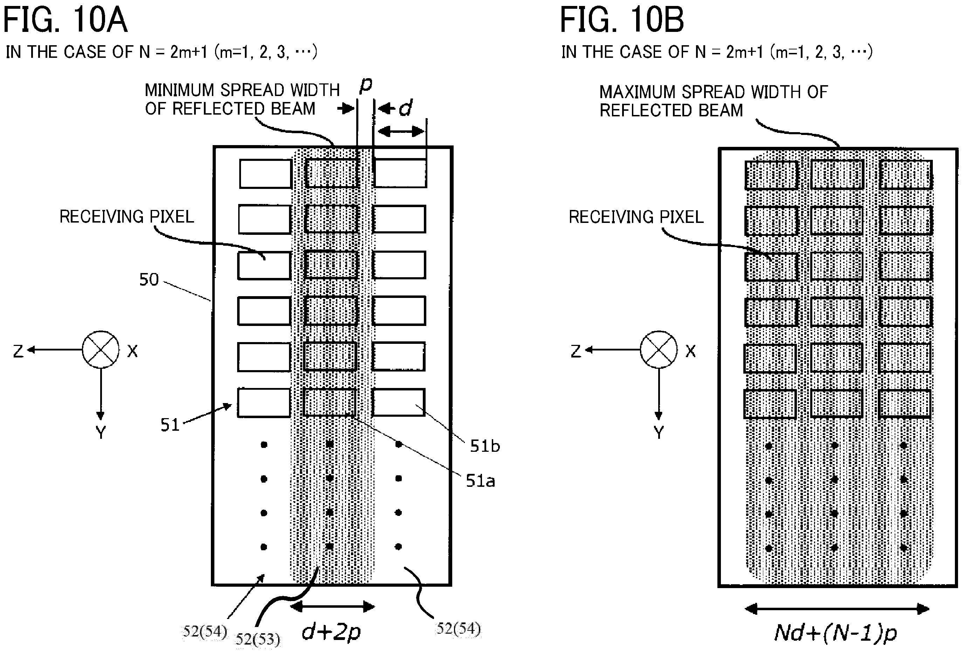

FIGs. 10A and 10B are illustrations of an example of an arrangement of the light receiving elements in which the number of the pixel arrays 52 is odd (i.e., the main region on which the center of the light beam is incident exists). When the number of the pixel arrays 52 is odd, the pixel array 52 of the main region (i.e., the pixel array 53 in FIG.10) is disposed at the center of the light receiving element 50, and the pixel arrays 52 of the shift detection regions are disposed on both sides of the pixel array 52 (i.e., the pixel array 54 in FIG.10). The light receiving element 50 estimates the amount of the horizontal shift of the reflected light beam mainly based on an amount of light change of the pixel array 52 in the shift detection region. In FIG. 10, three-pixel arrays 52 are depicted as an example, but the number of the pixel arrays is not limited to three. The light receiving pixel may include three- or more pixel arrays as long as the number of the pixel arrays are odd.

When the number of pixel arrays 52 is odd, instead of even, there is a condition to efficiently detect an amount of light change from the arrangement of pixel arrays with respect to the spread angle of the reflected light beam. When the reflected light beam is formed to be narrower than the size d of the light receiving pixel 51 (i.e., size of d in a direction of the horizontal shift) and the pitch p between the light receiving pixels on both sides, which may be the minimum spread angle of the reflected light beam, and horizontally shifted on the pixel, there is a position where the shift direction or the accurate shift position cannot be detected. As illustrated in FIG. 10A, the relation between the spread angle of the projecting light beam $\theta_t$ and the tangential direction of the sum of the size d of the light receiving pixel in the main region and the pitch p between the pixels on both sides of the main region is given by a mathematical expression below.

$$2 \tan^{-1}\left(\frac{d + 2p}{2f_r}\right) < \theta_t$$

The number of pixel arrays 52 is represented as N = 2m + 1 (m is a natural number, e.g., m = 1, 2, 3,...). As illustrated in FIG. 10B, for the maximum reflected light beam spread angle, the relation between the tangential direction of the sum of the width Nd of all pixel arrays 52 (i.e., N × d) of the light receiving element and the pitch (i.e., (N - 1) × p) between all pixels and the sum of the spread angle of the projecting light beam $\theta_t$ and the angle change $\delta\theta$ of the scanning mirror is expressed by a mathematical expression below as in the case of array with even number.

$$\theta_r + 8A \sin\left(\frac{L}{c}\omega_s\right) \le 2 \tan^{-1}\left(\frac{Nd + (N-1)p}{2f_r}\right)$$

When these expressions are modified and arranged, a mathematical expression below is derived.

$$2 \tan^{-1}\left(\frac{d + 2p}{2f_r}\right) < \theta_t \le 2 \tan^{-1}\left(\frac{Nd + (N-1)p}{2f_r}\right) - 8A \sin\left(\frac{L}{c}\omega_s\right)$$

where $\omega_s$ is a sinusoidal angular velocity of scanning, A is a maximum mechanical deflection angle, L is a maximum detection distance, $f_r$ is a focal length of the light receiving optical element, d is a width of each of the light receiving pixels, p is a pitch between the light receiving pixels, c is the speed of light, $\theta_t$ is a spread angle of projecting light, and N is the number of pixel arrays arranged along a direction in which horizontal deviation occurs in the light receiving element.
As illustrated in FIGs. 10A and 10B, when N is an odd number, the spread angle $\theta_t$ of the projecting beam is set to satisfy the mathematical expression described above.
In FIGs. 9A and 9B, the number of pixel arrays 52 is even, in FIGs. 10A and 10B the number of pixel arrays 52 is odd. However, in a case where a reference position that the reflected light beam reaches on the light receiving element 50 is shifted to a pixel array 52 other than the center, such as on a pixel array 52 adjacent, the conditional expressions of the spread angles of the projecting beams of an even number and an odd number may be switched. The conditions described above (e.g., even number and odd number) are appropriately changed according to the reference position at which the light receiving element 50 receives the light beam.

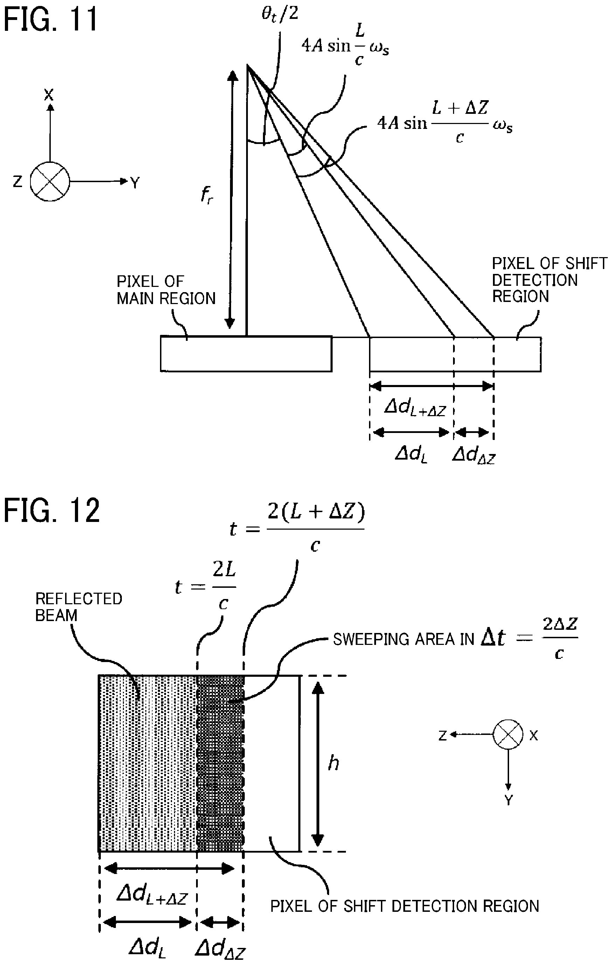

FIGs. 11 and 12 are schematic views of an amount of light change in the received light due to horizontal shifting of the reflected light beam. When the reflected light beam is horizontally shifted on the pixel array 52 of the shift detection region, which depends on the setting of the scanning speed (i.e., driving frequency) of the light deflector 30 and the focal length fr, the amount of light change corresponding to the amount of the horizontal shift becomes equal to or less than the detection limit of the pixel array 52 of the shift detection region, and the horizontal shift may not be accurately estimated. To detect the amount of the horizontal shift corresponding to a distance at least equal to or greater than the distance resolution $\Delta Z$ of the object detector 2, various parameters are set.
As illustrated in FIG. 11, in the case of the light deflector 30 formed by, for example, a MEMS mirror, a minute amount of horizontal shift $\Delta d_{\Delta Z}$ corresponding to a minute difference between the distance L and the distance L+$\Delta Z$ is given by a mathematical expression below based on a tangential relation using a half angle $\theta_t/2$ of a light projection spread angle and a half angle $\delta\theta/2$ of an angle change.

$$\Delta d_{\Delta Z} = f_r \left\{\tan\left(\frac{\theta_t}{2} + 4A \sin\left(\frac{L + \Delta Z}{c}\omega_s\right)\right) - \tan\left(\frac{\theta_t}{2} + 4A \sin\left(\frac{L}{c}\omega_s\right)\right)\right\}$$

As illustrated in FIG. 12, a sweeping area $\Delta S$ on the light receiving pixel 51 in the shift detection region, which is a minute horizontal shift corresponding to the minute difference between the distance L and the distance L+$\Delta Z$, is given by an equation below.

$$\Delta S = \Delta d_{\Delta Z} \times h.$$

At this time, the focal length $f_r$ is given by a mathematical expression below.

$$f_r \geq \frac{P_{limit}}{W} \frac{1}{h\left\{\tan\left(\frac{\theta_t}{2} + 4A\sin\left(\frac{L+\Delta Z}{c}\omega_s\right)\right) - \tan\left(\frac{\theta_t}{2} + 4A\sin\left(\frac{L}{c}\omega_s\right)\right)\right\}}$$

where h is a height of the light receiving pixel 51, W is the power density of the reflected light beam on the light receiving pixel 51, and the relational expression between the received light amount change $\Delta P = W \times \Delta S$ in the sweep area and the detection limit $P_{limit}$ of the light receiving pixel 51 (pixel array 52) in the detection region are deformed. The height of the light receiving pixel 51 h is defined in a direction perpendicular to the first direction.

By designing the light receiving optical system to satisfy the focal length fr, a horizontal shift signal in the light receiving pixel in the detection region can be detected.

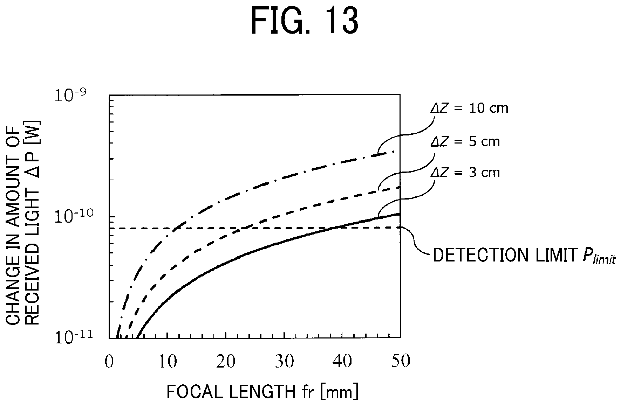

FIG. 13 is a graph of the relation between the focal length, amount of change of receiving light, and the detection limit. In FIG. 13, the relation between the amount of change of received light $\Delta P$ and the focal length $f_r$ at each distance resolution $\Delta Z$ is obtained by the specific values: the driving frequency f of the scanning mirror is 1,000 Hz; the amplitude A is 50 degrees; the object distance L is 100 m; the light source power P is 100 W; and the detection limit $P_{limit}$ of light receiving pixel 51 in the shift detection region is $8 \times 10^{-11}$ W. In order to ensure a detectable change in the amount of light due to a horizontal shift, the focal length $f_r$ increases as the distance resolution $\Delta Z$ of the object detection apparatus decreases.

In the present embodiment, a MEMS mirror is used as the light deflector 30, but the light deflector 30 is not limited thereto. In one or more examples, a polygon mirror may be used as the light deflector 30. The polygon mirror has a feature of constant angular velocity (i.e., constant angular velocity of scanning). Thus, for a given angular speed $\omega_u$, the angle of the polygon mirror changes by $t \times \omega_u = 2L/c \times \omega_u$ during time t, due to the time $t = 2L/c$ required for light to travel back and forth to an object of length L. For this reason, when light travels back and forth from the light beam emission by the light source 10 to an object at a length L, the angle of the polygon mirror advances by $2L/c \times \omega_u$. As a result, considering that the incident angle of the projected/received light beam on the polygon mirror changes by this angle, and the light beam reflected by the polygon mirror is guided to the light receiving element 50, an angular shift in the projected/received light beam occurs by an angle twice this angle. When the polygon mirror is used, and the number of the pixel arrays 52 is an even number (i.e., the main region on which the center of the light beam is incident does not exist), the spread angle $\theta_t$ of the projecting light beam satisfies a mathematical expression below.

$$2\tan^{-1}\left(\frac{d}{2f_r}\right) < \theta_t \leq 2\tan^{-1}\left(\frac{Nd + (N-1)p}{2f_r}\right) - 4\frac{L}{c}\omega_u$$

where $\omega_u$ is a constant angular velocity of scanning, L is a maximum detection distance, $f_r$ is a focal length of the light receiving optical element, d is a width of each of the light receiving pixels, p is a pitch between the light receiving pixels, c is the speed of light, $\theta_t$ is a spread angle of projecting light, and N is the number of pixel arrays arranged along a direction in which horizontal deviation occurs in the light receiving element.

When the number of pixel arrays 52 is odd (i.e., the main region on which the center of the light beam is incident exists), the spread angle of the projecting light beam $\theta_t$ satisfies a mathematical expression below.

$$2\tan^{-1}\left(\frac{d + 2p}{2f_r}\right) < \theta_t \leq 2\tan^{-1}\left(\frac{Nd + (N-1)p}{2f_r}\right) - 4\frac{L}{c}\omega_u$$

where $\omega_u$ is a constant angular velocity of scanning, L is a maximum detection distance, $f_r$ is a focal length of the light receiving optical element, d is a width of each of the light receiving pixels, p is a pitch between the light receiving pixels, c is the speed of light, $\theta_t$ is a spread angle of projecting light, and N is the number of pixel arrays arranged along a direction in which horizontal deviation occurs in the light receiving element.

Also in the case of the polygon mirror, similarly to the MEMS mirror, when the reference position that the reflected light beam reaches on the light receiving element 50 is shifted to the pixel array 52 other than the center such as on the adjacent pixel arrays 52, the conditional expressions of the spread angles of the projected beams of an even number and an odd number are switched. The conditions described above (e.g., the even number and the odd number) are appropriately changed according to the reference position at which the light receiving element 50 receives the light beam.

When a polygon mirror is used as the light deflector 30, the focal length $f_r$ is given by the conditional expression below.

$$f_r \geq \frac{P_{limit}}{W} \frac{1}{\mathrm{h}\left\{\tan\left(\frac{\theta_t}{2} + 2\frac{L + \Delta Z}{c}\omega_u\right) - \tan\left(\frac{\theta_t}{2} + 2\frac{L}{c}\omega_u\right)\right\}}$$

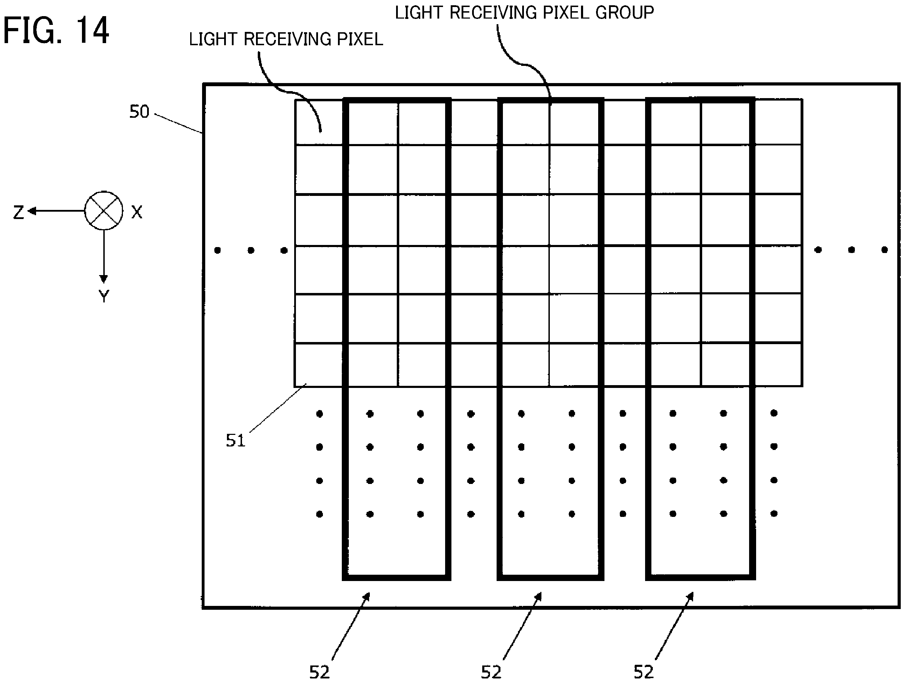

FIG. 14 is an illustration of an arrangement of light receiving element 50 according to a modification of an embodiment. In the pixel arrangement of the light receiving element 50 described in the above embodiment, the amount of horizontal shift of the reflected light beam on the light receiving element 50 and the arrangement balance of the light receiving pixels 51 is designed by adjusting the size of the light receiving pixels 51, the pitch between the light receiving pixels 51, or adjusting the parameters of the light receiving optical system, such as the focal length $f_r$, according to the assumed object distance L. Such adjustment for the light receiving element 50, however, involves preparations for a different light receiving element 50 and a different object detector 2 designed for each measurement distance.

To eliminate the needs for such preparations, in the present modification in FIG. 14, a light receiving element 50 of a two-dimensional array is used. The two-dimensional array includes a large number of pixel arrays arranged in the Z-direction. The light receiving element 50 according to the modification includes the two-dimensional array structure in which multiple light receiving pixels 51 are arranged in both the Z-direction, as the first direction and the Y-direction as the second direction. In other words, the multiple light receiving pixels are two-dimensionally arranged. This arrangement allows a selective change in positions or a combination of light receiving pixels 51 to be driven. In other words, a position or a combination of the light receiving pixels 51 to be driven are selectable.

As described above, since the light receiving element is set to flexibly cope with various situations as a hardware, different light receiving elements 50 for each measurement distance are not to be prepared. According to the measurement distance, the number of pixel arrays to be used may be changed, pixel arrays to be used may be selected, the number of pixel arrays may be thinned out to secure a pitch between the light receiving pixels 51, a width of a pixel array may be changed by adding information on multiple pixel arrays as a single array, or information of the horizontal shift may be complemented.

In such a case, the size of each light receiving pixel 51 can be smaller than the size of one line-shape pixel having larger pixel size in detecting an amount of light, although the total amount of light to be captured does not change. As a result, information reading becomes faster than measurement by one pixel array. In addition, the summit position of the Gaussian beam of the reflected light can be estimated with high accuracy by processing the pieces of information on light amount in multiple pixel arrays 52 together. As a result, the estimation accuracy of the amount of horizontal shift improves. Further, secondarily, the scanning speed of the light deflector 30 can be monitored by processing the position of the pixel array 52 which received light and information on the light reception time together.

In the present embodiment, conditions are: a line-shape beam elongating in the Y-direction is used; the light deflector 30 is one axis scanning; and the line-shape beam is scanned in one dimension. However, the conditions are not limited thereto, and there is a latitude in the conditions. For example, in two-dimensional scanning of a beam spot using a scanning mirror (i.e., optical deflector) of two axis scanning, each pixel of the light receiving element 50 of a two-dimensional array may be handled instead of a pixel array.

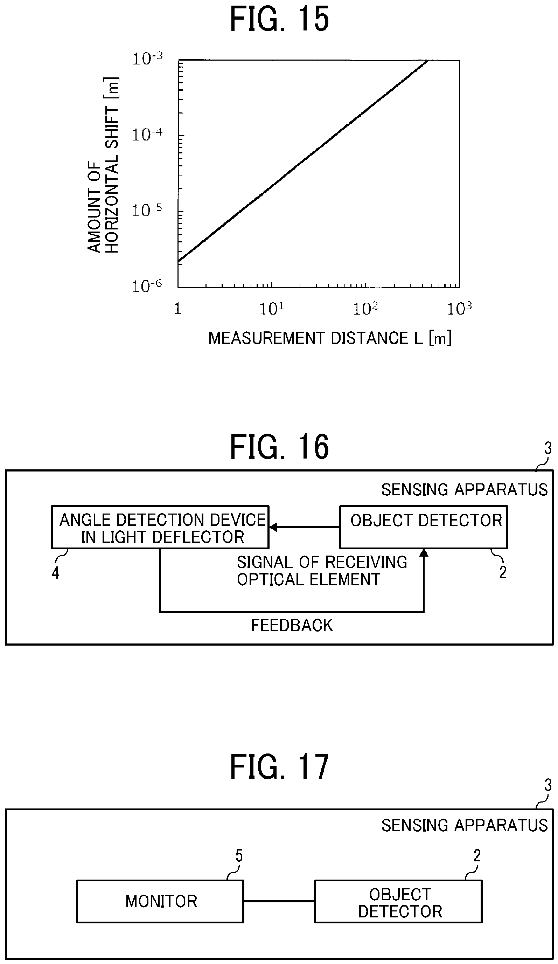

FIG. 15 is a graph of a relation between the measurement distance and an amount of horizontal shift on the light receiving element. The relation between the object distance L and the amount of horizontal shift of the graph in FIG. 15 is obtained by specific values: the driving frequency f of the scanning mirror is 1,000 Hz; the amplitude a is 50 degrees; and the focal length $f_r$ is 30 mm.

When the measurement distance is 10 m, an amount of the horizontal shift is approximately 20 $\mu$m, and when the measurement distance is 200 m, the amount of the horizontal shift is approximately 400 $\mu$m. In such a case, if the maximum measurement distance of the system design is adjusted to the measurement distance of 10 m, the measurement distance of 200 m cannot be measured, and if the maximum measurement distance of the system design is adjusted to the measurement distance of 200 m, the measurement accuracy is reduced when the measurement distance is 10 m. As in the modification of FIG. 14, when the position or the width (i.e., the width of the light receiving pixel 51 or the pixel array 52) of the pixel array to be used is changed, the measurement distance and the accuracy can be adjusted by the post-processing system of the light receiving element 50. As a result, the maximum measurement distance can be changed in accordance with the situation.

Examples of application for the object detection device according to the present embodiment are described with reference to FIGs. 16 and 17. FIG. 16 is a diagram of an example of a configuration of the sensing apparatus 3. As described above, when the amount of the horizontal shift of the reflected light beam on the light receiving element 50 is detected, the angle change of the light deflector 30 can be estimated from the amount of the horizontal shift. The object detector 2 may have a function of angle detection of the light deflector 30. A sensing apparatus 3 according to FIG. 16 includes the object detector 2 described above and a deflector angle detector 4 that constantly or periodically monitors an angle change of the optical scanner 1 based on an output by the object detector 2 and circumstantially inputs a feedback to the object detector 2. A sensing apparatus 3 estimates information on scanning angle of a light deflector 30 with a deflector angle detector 4 by using a signal of light receiving element of the object detector 2 and provides a feedback on the scanning angle to the object detector 2. As a result, the angle detection function may be utilized for drive control of the light deflector 30 instead of other angle detection functions. Examples of other angle detection functions are a four terminal resistor based on silicon impurity doping, and a detection piezo element. In a case where the light deflector 30 is a polygon mirror, a signal of horizontal synchronization is obtained at one point in one scan. In contrast, in a case where the light deflector 30 is a MEMS mirror, the number of sampling points of the signal of horizontal synchronization increases. In addition, the accuracy of angle detection together with other angle detection functions increases. In addition, for example, deterioration detection or failure detection of a driving source of a MEMS mirror can be known by estimating an angle change or a scanning speed of the light deflector 30.

FIG. 17 is a diagram of another example of a configuration of the sensing apparatus 3. The sensing apparatus 3 includes the object detector 2 described above and a monitor 5. The object detector 2 and the monitor 5 are electrically connected each other.

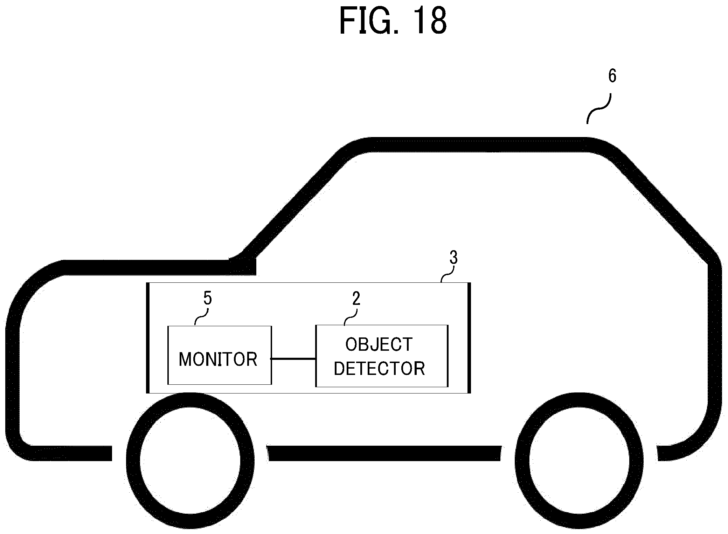

The sensing apparatus 3 is mounted on, for example, a vehicle 6. Specifically, the sensing apparatus 3 is mounted in the vicinity of a bumper or a rearview mirror of the vehicle. In FIG. 17, the monitor 5 is illustrated as being provided inside the sensing apparatus 3, but the monitor 5 may be provided in the vehicle 6 separately from the sensing apparatus 3. FIG. 18 is an illustration of a vehicle 6 including the sensing apparatus 3. The vehicle 6 is an example of a mobile object.

The monitor 5 obtains information including at least one of the presence or absence of an object, a movement direction of the object, and a movement speed of the object based on an output of the object detector 2. The monitor 5 processes such as determination of the shape and size of the object, calculation of position information on the object, calculation of movement information, and recognition of the type of the object based on the output from the object detector 2. The monitor 5 controls traveling of the vehicle based on at least one of the position information or the movement information of the object. For example, when the monitor 5 detects an object, which is an obstacle, in front of the vehicle, the monitor 5 applies an automatic braking by an automatic driving technique, issues an alarm, turns a steering wheel, or issues an alarm on pressing the brake pedal. The mobile object is not limited to the vehicle 6. The sensing apparatus 3 may be mounted on an aircraft or a vessel. The sensing apparatus 3 may also be mounted on a mobile object such as drone or a robot that automatically moves without a driver.

According to the present embodiments described above, since multiple light receiving pixels 51 are arranged side by side along the shift direction of the light beam caused by the high-speed movement of the light deflector 30, the sensing apparatus 3 detects an object with high accuracy.

In addition, the present embodiment is not limited to embodiments and modifications described above, and various changes, substitutions, and modifications may be made without departing from the spirit of the technical idea. Furthermore, if the technical idea can be realized in another manner by technical advancement or another derivative technology, the technical idea may be implemented by using the method. The claims cover all embodiments that can be included within the scope of the technical idea.

As described above, the present embodiments of the present invention achieve highly accurate object detection, and are particularly useful for an object detector, and a sensing apparatus.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An object detector (2) comprising:

an optical scanner (1) including:

a light source unit (11) configured to emit a light beam; and
a light deflector (30) configured to deflect the light beam emitted from the light source unit (11) to scan an object in a detection region with the deflected light beam,

a light receiving optical element (40) configured to collect the light beam returned from the object through at least one of reflection or scatter on the object in the detection region in response to scanning with the light beam deflected by the light deflector (30); and
a light receiving element (50) configured to receive the light beam collected by the light receiving optical element (40), the light receiving element (50) including multiple light receiving pixels (51) arranged in a first direction at different positions on a plane perpendicular to the optical axis;
wherein the multiple light receiving pixels (51) are further arranged in a second direction intersecting the first direction to form a pixel array (52);
**characterized in that** the light deflector (30) satisfies the mathematical expressions below:

$$2 \tan^{-1}\left(\frac{d}{2f_r}\right) < \theta_t \le 2 \tan^{-1}\left(\frac{Nd + (N-1)p}{2f_r}\right) - 8A \sin\left(\frac{L}{c}\omega_s\right)$$

when N is an even number equal to 2m where m is a natural number; and

$$2 \tan^{-1}\left(\frac{d + 2p}{2f_r}\right) < \theta_t \le 2 \tan^{-1}\left(\frac{Nd + (N-1)p}{2f_r}\right) - 8A\left(\frac{L}{c}\omega_s\right)$$

when N is an odd number equal to 2m + 1 where m is a natural number
where

$\omega_s$ is a sinusoidal angular velocity of scanning,
A is a maximum mechanical deflection angle,
L is a maximum detection distance,
$f_r$ is a focal length of the light receiving optical element (40),
d is a width of each of the light receiving pixels (51) in the first direction,
p is a distance in the first direction between adjacent light receiving pixels (51),
c is the speed of light,
$\theta_t$ is a spread angle of projecting light, and
N is the number of pixel arrays (52) arranged along a direction in which horizontal shift occurs in the light receiving element (50) due to an angle change of the light deflector (30).

2. The object detector (2) according to claim 1,

wherein the light deflector (30) has a sinusoidal angular velocity of scanning, and a focal length $f_r$ of the light receiving optical element (40) satisfies a mathematical expression below:

$$f_r \ge \frac{P_{limit}}{W} \frac{1}{h\left\{\tan\left(\frac{\theta_t}{2} + 4A\sin\left(\frac{L + \Delta Z}{c}\omega_s\right)\right) - \tan\left(\frac{\theta_t}{2} + 4A\sin\left(\frac{L}{c}\omega_s\right)\right)\right\}}$$

where

$\Delta Z$ is a distance resolution,
W is a power density of the light beam on the light receiving element (50),
h is a height of the light receiving pixel,
$P_{limit}$ is a detection limit of the light receiving element (50)
$\omega_s$ is a sinusoidal angular velocity of scanning,
A is a maximum mechanical deflection angle,

L is a maximum detection distance,

$f_r$ is a focal length of the light receiving optical element (40),

c is the speed of light, and

$\theta_t$ is a spread angle of projecting light.

3. An object detector (2) comprising:

an optical scanner (1) including:

a light source unit (11) configured to emit a light beam; and

a light deflector (30) configured to deflect the light beam emitted from the light source unit (11) to scan an object in a detection region with the deflected light beam,

a light receiving optical element (40) configured to collect the light beam returned from the object through at least one of reflection or scatter on the object in the detection region in response to scanning with the light beam deflected by the light deflector (30); and

a light receiving element (50) configured to receive the light beam collected by the light receiving optical element (40), the light receiving element (50) including multiple light receiving pixels (51) arranged in a first direction at different positions on a plane perpendicular to the optical axis;

wherein the multiple light receiving pixels (51) are further arranged in a second direction intersecting the first direction to form a pixel array (52);

**characterized in that** the light deflector (30) satisfies the mathematical expressions below:

$$2 \tan^{-1}\left(\frac{d}{2f_r}\right) < \theta_t \le 2 \tan^{-1}\left(\frac{Nd + (N-1)p}{2f_r}\right) - 4\frac{L}{c}\omega_u$$

when N is an even number equal to 2m where m is a natural number; and

$$2 \tan^{-1}\left(\frac{d + 2p}{2f_r}\right) < \theta_t \le 2 \tan^{-1}\left(\frac{Nd + (N-1)p}{2f_r}\right) - 4\frac{L}{c}\omega_u$$

when N is an odd number equal to 2m + 1 where m is a natural number, where

$\omega_u$ is a constant angular velocity of scanning,

L is a maximum detection distance,

$f_r$ is a focal length of the light receiving optical element (40),

d is a width of each of the light receiving pixels (51) in the first direction,

p is a distance in the first direction between adjacent light receiving pixels (51),

c is the speed of light,

$\theta_t$ is a spread angle of projecting light, and

N is the number of pixel arrays (52) arranged along a direction in which horizontal shift occurs in the light receiving elements (50) due to an angle change of the light deflector (30).

4. The object detector (2) according to claim 3,

wherein the light deflector (30) has a constant angular velocity of scanning, and a focal length $f_r$ of the light receiving optical element (40) satisfies a mathematical expression below:

$$f_r \ge \frac{P_{limit}}{W} \frac{1}{\mathrm{h}\left\{\tan\left(\frac{\theta_t}{2} + 2\frac{L + \Delta Z}{c}\omega_u\right) - \tan\left(\frac{\theta_t}{2} + 2\frac{L}{c}\omega_u\right)\right\}}$$

where

$\Delta Z$ is a distance resolution,

W is a power density of the light beam on the light receiving element (50), h is a height of the light receiving pixel, and

$P_{limit}$ is a detection limit of the light receiving element (50),

$\omega_u$ is a constant angular velocity of scanning,

L is a maximum detection distance,

$f_r$ is a focal length of the light receiving optical element (40),

c is the speed of light, and

$\theta_t$ is a spread angle of projecting light.

5. The object detector (2) according to any one of claims claim 1 to 4,
   wherein the second direction is orthogonal to the first direction on the plane perpendicular to the optical axis.

6. The object detector (2) according to any one of claims 1 to 5,

   wherein a beam width (Db) of the light beam collected by the light receiving optical element (40) satisfies a conditional expression below:

   $$Db < d1 + d2 + p$$

   where

   d1 is a size in the first direction of a first light receiving pixel (51a) among the multiple light receiving pixels (51),
   d2 is a size in the first direction of a second light receiving pixel (51b) among the multiple light receiving pixels (51),
   p is a distance in the first direction between the first light receiving pixel (51a) and the second light receiving pixel (51b), and
   the first light receiving pixel (51a) and the second light receiving pixel (51b) are adjacent to each other in the first direction.

7. The object detector (2) according to any one of claims 1 to 6,

   wherein the light receiving element (50) has a two-dimensional array structure in which the multiple light receiving pixels (51) are two-dimensionally arranged in the first direction and a second direction intersecting the first direction, and
   wherein a position or a combination of the light receiving pixels (51) to be driven are selectable.

8. The object detector (2) according to any one of claims 1 to 7, further comprising an object detecting unit (21) configured to:

   generate a detection signal based on an amount of light received by the light receiving element (50);
   determine an object detection time based on the light receiving signal and a light emission time of the light source unit (11); and
   detect the object based on the object detection time and the light emission time of the light source unit (11).

9. The object detector (2) according to claim 8,
   wherein the object detecting unit (21) is further configured to calculate an amount of change in deflection angle of the light deflector (30) from a distribution of the amount of light received by the multiple light receiving pixels (51) of the light receiving element (50).

10. A sensing apparatus (3) comprising:

    the object detector (2) according to any one of claims 1 to 9; and
    a deflector angle detector (4) configured to constantly or periodically detect an angle change of the light deflector (30) based on an output of the object detector (2) and input feedback to the object detector (2).

**11.** A sensing apparatus (3) comprising:

 the object detector (2) according to any one of claims 1 to 9; and
 a monitor (5) configured to obtain information of the object based on an output of the object detector (2), the information including at least one of presence or absence of the object, a movement direction of the object, and a movement speed of the object.

**12.** The sensing apparatus (3) according to claim 11,
 wherein the sensing apparatus (3) is mounted on a vehicle (6), and the monitor (5) is further configured to control a traveling of the vehicle based on at least one of position information or movement information of the object.

**13.** A mobile object (6) comprising the object detector (2) according to any one of claims 1 to 9.

**Patentansprüche**

**1.** Obj ektdetektor (2), umfassend:
 einen optischen Scanner (1), der Folgendes umfasst:

 eine Lichtquelleneinheit (11), die so konfiguriert ist, dass sie einen Lichtstrahl emittiert; und
 eine Lichtablenkvorrichtung (30), die so konfiguriert ist, dass sie den von der Lichtquelleneinheit (11) emittierten Lichtstrahl ablenkt, um ein Objekt in einem Erfassungsbereich mit dem abgelenkten Lichtstrahl abzutasten,
 ein lichtempfangendes optisches Element (40), das so konfiguriert ist, dass es den Lichtstrahl sammelt, der von dem Objekt durch mindestens eine der Reflexion oder Streuung an dem Objekt in dem Erfassungsbereich zurückgegeben wird, als Reaktion auf das Abtasten mit dem durch die Lichtablenkvorrichtung (30) abgelenkten Lichtstrahl; und
 ein lichtempfangendes Element (50), das so konfiguriert ist, dass es den Lichtstrahl empfängt, der durch das lichtempfangende optische Element (40) gesammelt wird, wobei das lichtempfangende Element (50) mehrere lichtempfangende Pixel (51) umfasst, die in einer ersten Richtung an verschiedenen Positionen auf einer Ebene senkrecht zur optischen Achse angeordnet sind;
 wobei die mehreren lichtempfangenden Pixel (51) ferner in einer zweiten Richtung angeordnet sind, die die erste Richtung schneidet, um ein Pixelarray (52) zu bilden;
 **dadurch gekennzeichnet, dass** die Lichtablenkvorrichtung (30) die unten aufgeführten mathematischen Ausdrücke erfüllt:

$$2\tan^{-1}\left(\frac{d}{2f_r}\right) < \theta_t \le 2\tan^{-1}\left(\frac{Nd+(N-1)p}{2f_r}\right) - 8A\sin\left(\frac{L}{c}\omega_s\right)$$

wenn N eine gerade Zahl gleich 2m ist, wobei m eine natürliche Zahl ist; und

$$2\tan^{-1}\left(\frac{d+2p}{2f_r}\right) < \theta_t \le 2\tan^{-1}\left(\frac{Nd+(N-1)p}{2f_r}\right) - 8A\left(\frac{L}{c}\omega_s\right)$$

wenn N eine ungerade Zahl gleich 2m + 1 ist, wobei m eine natürliche Zahl ist
wobei
$\omega_s$ eine sinusförmige Abtastwinkelgeschwindigkeit ist,
A ein maximaler mechanischer Ablenkwinkel ist,
L ein maximaler Erfassungsabstand ist,
$f_r$ eine Brennweite des lichtempfangenden optischen Elements (40) ist,
d eine Breite jedes der lichtempfangenden Pixel (51) in der ersten Richtung ist,
p ein Abstand in der ersten Richtung zwischen benachbarten lichtempfangenden Pixeln (51) ist,
c die Lichtgeschwindigkeit ist,
$\theta_t$ ein Ausbreitungswinkel des projizierten Lichts ist, und
N die Anzahl der Pixelarrays (52) ist, die entlang einer Richtung angeordnet sind, in der eine horizontale Verschiebung in dem lichtempfangenden Element (50) aufgrund einer Winkeländerung der Lichtablenkvorrichtung (30) auftritt.

2. Objektdetektor (2) nach Anspruch 1,

wobei die Lichtablenkvorrichtung (30) eine sinusförmige Abtastwinkelgeschwindigkeit aufweist und eine Brennweite $f_r$ des lichtempfangenden optischen Elements (40) den unten aufgeführten mathematischen Ausdruck erfüllt:

$$f_r \geq \frac{P_{limit}}{W} \frac{1}{h\left\{\tan\left(\frac{\theta_t}{2} + 4A\sin\left(\frac{L+\Delta Z}{c}\omega_s\right)\right) - \tan\left(\frac{\theta_t}{2} + 4A\sin\left(\frac{L}{c}\omega_s\right)\right)\right\}}$$

wobei

$\Delta Z$ eine Distanzauflösung ist,
W eine Leistungsdichte des Lichtstrahls an dem lichtempfangenden Element (50) ist, h eine Höhe des lichtempfangenden Pixels ist,
$P_{limit}$ eine Erfassungsgrenze des lichtempfangenden Elements (50) ist,
$\omega_s$ eine sinusförmige Abtastwinkelgeschwindigkeit ist,
A ein maximaler mechanischer Ablenkwinkel ist,
L ein maximaler Erfassungsabstand ist,
$f_r$ eine Brennweite des lichtempfangenden optischen Elements (40) ist,
c die Lichtgeschwindigkeit ist, und
$\theta_t$ ein Ausbreitungswinkel des projizierten Lichts ist.

3. Objektdetektor (2), umfassend:

einen optischen Scanner (1), umfassend:

eine Lichtquelleneinheit (11), die so konfiguriert ist, dass sie einen Lichtstrahl emittiert; und
eine Lichtablenkvorrichtung (30), die so konfiguriert ist, dass sie den von der Lichtquelleneinheit (11) emittierten Lichtstrahl ablenkt, um ein Objekt in einem Erfassungsbereich mit dem abgelenkten Lichtstrahl abzutasten,

ein lichtempfangendes optisches Element (40), das so konfiguriert ist, dass es den Lichtstrahl sammelt, der von dem Objekt durch mindestens eine der Reflexion oder Streuung an dem Objekt in dem Erfassungsbereich zurückgegeben wird, als Reaktion auf das Abtasten mit dem durch die Lichtablenkvorrichtung (30) abgelenkten Lichtstrahl; und
ein lichtempfangendes Element (50), das so konfiguriert ist, dass es den Lichtstrahl empfängt, der durch das lichtempfangende optische Element (40) gesammelt wird, wobei das lichtempfangende Element (50) mehrere lichtempfangende Pixel (51) umfasst, die in einer ersten Richtung an verschiedenen Positionen auf einer Ebene senkrecht zur optischen Achse angeordnet sind;
wobei die mehreren lichtempfangenden Pixel (51) ferner in einer zweiten Richtung angeordnet sind, die die erste Richtung schneidet, um ein Pixelarray (52) zu bilden;
**dadurch gekennzeichnet, dass** die Lichtablenkvorrichtung (30) die unten aufgeführten mathematischen Ausdrücke erfüllt:

$$2\tan^{-1}\left(\frac{d}{2f_r}\right) < \theta_t \leq 2\tan^{-1}\left(\frac{Nd + (N-1)p}{2f_r}\right) - 4\frac{L}{c}\omega_u$$

wenn N eine gerade Zahl gleich 2m ist, wobei m eine natürliche Zahl ist; und

$$2 \tan^{-1}\left(\frac{d + 2p}{2f_r}\right) < \theta_t \leq 2 \tan^{-1}\left(\frac{Nd + (N-1)p}{2f_r}\right) - 4\frac{L}{c}\omega_u$$

wenn N eine ungerade Zahl gleich 2m + 1 ist, wobei m eine natürliche Zahl ist, wobei

$\omega_u$ eine konstante Abtastwinkelgeschwindigkeit ist,
L ein maximaler Erfassungsabstand ist,
$f_r$ eine Brennweite des lichtempfangenden optischen Elements (40) ist,
d eine Breite jedes der lichtempfangenden Pixel (51) in der ersten Richtung ist,
p ein Abstand in der ersten Richtung zwischen benachbarten lichtempfangenden Pixeln (51) ist,
c die Lichtgeschwindigkeit ist,
$\theta_t$ ein Ausbreitungswinkel des projizierten Lichts ist, und
N die Anzahl der Pixelarrays (52) ist, die entlang einer Richtung angeordnet sind, in der eine horizontale Verschiebung in den lichtempfangenden Elementen (50) aufgrund einer Winkeländerung der Lichtablenkvorrichtung (30) auftritt.

4.  Objektdetektor (2) nach Anspruch 3,

wobei die Lichtablenkvorrichtung (30) eine konstante Winkelgeschwindigkeit des Abtastens aufweist und eine Brennweite $f_r$ des lichtempfangenden optischen Elements (40) den unten aufgeführten mathematischen Ausdruck erfüllt:

$$f_r \geq \frac{P_{limit}}{W} \frac{1}{h\left\{\tan\left(\frac{\theta_t}{2} + 2\frac{L + \Delta Z}{c}\omega_u\right) - \tan\left(\frac{\theta_t}{2} + 2\frac{L}{c}\omega_u\right)\right\}}$$

wobei

$\Delta Z$ eine Distanzauflösung ist,
W eine Leistungsdichte des Lichtstrahls an dem lichtempfangenden Element (50) ist, h eine Höhe des lichtempfangenden Pixels ist,
$P_{limit}$ eine Erfassungsgrenze des lichtempfangenden Elements (50) ist,
$\omega_u$ eine konstante Abtastwinkelgeschwindigkeit ist,
L ein maximaler Erfassungsabstand ist,
$f_r$ eine Brennweite des lichtempfangenden optischen Elements (40) ist,
c die Lichtgeschwindigkeit ist, und
$\theta_t$ ein Ausbreitungswinkel des projizierten Lichts ist.

5.  Objektdetektor (2) nach einem der Ansprüche 1 bis 4,
wobei die zweite Richtung orthogonal zur ersten Richtung auf der Ebene senkrecht zur optischen Achse ist.

6.  Objektdetektor (2) nach einem der Ansprüche 1 bis 5,

wobei eine Strahlbreite (Db) des von dem lichtempfangenden optischen Element (40) gesammelten Lichtstrahls den nachstehenden bedingten Ausdruck erfüllt:

$$Db < d1 + d2 + p$$

wobei

d1 eine Größe in der ersten Richtung eines ersten lichtempfangenden Pixels (51a) unter den mehreren lichtempfangenden Pixeln (51) ist,
d2 eine Größe in der ersten Richtung eines zweiten lichtempfangenden Pixels (51b) unter den mehreren lichtempfangenden Pixeln (51) ist,

p ein Abstand in der ersten Richtung zwischen dem ersten lichtempfangenden Pixel (51a) und dem zweiten lichtempfangenden Pixel (51b) ist, und

das erste lichtempfangende Pixel (51a) und das zweite lichtempfangende Pixel (51b) in der ersten Richtung benachbart zueinander sind.

7. Objektdetektor (2) nach einem der Ansprüche 1 bis 6,

wobei das lichtempfangende Element (50) eine zweidimensionale Arraystruktur aufweist, in der die mehreren lichtempfangenden Pixel (51) zweidimensional in der ersten Richtung und einer zweiten Richtung, die die erste Richtung schneidet, angeordnet sind, und

wobei eine Position oder eine Kombination der anzusteuernden lichtempfangenden Pixel (51) auswählbar ist.

8. Objektdetektor (2) nach einem der Ansprüche 1 bis 7, ferner umfassend eine Objekterfassungseinheit (21), die konfiguriert ist zum:

Erzeugen eines Erfassungssignals auf der Grundlage einer Lichtmenge, die von dem lichtempfangenden Element (50) empfangen wird;

Bestimmen einer Objekterfassungszeit auf der Grundlage des Lichtempfangssignals und einer Lichtemissionszeit der Lichtquelleneinheit (11); und

Erfassen des Objekt auf der Grundlage der Objekterfassungszeit und der Lichtemissionszeit der Lichtquelleneinheit (11).

9. Objektdetektor (2) nach Anspruch 8,
wobei die Objekterfassungseinheit (21) ferner so konfiguriert ist, dass sie einen Änderungsbetrag des Ablenkwinkels der Lichtablenkvorrichtung (30) aus einer Verteilung der Lichtmenge berechnet, die von den mehreren lichtempfangenden Pixeln (51) des lichtempfangenden Elements (50) empfangen wird.

10. Sensorvorrichtung (3), umfassend:

den Objektdetektor (2) nach einem der Ansprüche 1 bis 9; und

einen Ablenkwinkeldetektor (4), der so konfiguriert ist, dass er eine Winkeländerung der Lichtablenkvorrichtung (30) auf der Grundlage einer Ausgabe des Objektdetektors (2) und einer Eingangsrückkopplung an den Objektdetektor (2) konstant oder periodisch erfasst.

11. Sensorvorrichtung (3), umfassend:

den Objektdetektor (2) nach einem der Ansprüche 1 bis 9; und

einen Monitor (5), der so konfiguriert ist, dass er auf der Grundlage einer Ausgabe des Objektdetektors (2) Informationen über das Objekt erhält, wobei die Informationen mindestens eines der folgenden Merkmale umfassen: Anwesenheit oder Abwesenheit des Objekts, eine Bewegungsrichtung des Objekts und eine Bewegungsgeschwindigkeit des Objekts.

12. Sensorvorrichtung (3) nach Anspruch 11,
wobei die Sensorvorrichtung (3) an einem Fahrzeug (6) angebracht ist und der Monitor (5) ferner so konfiguriert ist, dass er eine Fahrt des Fahrzeugs auf der Grundlage von Positionsinformationen oder Bewegungsinformationen des Objekts oder von beidem steuert.

13. Mobiles Objekt (6), umfassend den Objektdetektor (2) nach einem der Ansprüche 1 bis 9.

**Revendications**

1. Détecteur d'objets (2) comprenant :

un scanner optique (1) comportant :

une unité de source de lumière (11) conçue pour émettre un faisceau lumineux, et
un déflecteur de lumière (30) conçu pour dévier le faisceau lumineux émis par l'unité de source de lumière (11) afin de balayer un objet dans une région de détection avec le faisceau lumineux dévié ;

un élément optique récepteur de lumière (40) conçu pour collecter le faisceau lumineux renvoyé par l'objet par réflexion et/ou diffusion sur l'objet dans la région de détection en réaction au balayage avec le faisceau lumineux dévié par le déflecteur de lumière (30) ; et
un élément récepteur de lumière (50) conçu pour recevoir le faisceau lumineux collecté par l'élément optique récepteur de lumière (40), l'élément récepteur de lumière (50) comportant de multiples pixels récepteurs de lumière (51) agencés dans une première direction en différentes positions sur un plan perpendiculaire à l'axe optique ;
lesdits multiples pixels récepteurs de lumière (51) étant en outre agencés dans une deuxième direction croisant la première direction pour former un réseau de pixels (52) ;
**caractérisé en ce que** le déflecteur de lumière (30) satisfait les expressions mathématiques ci-dessous :

$$2 \tan^{-1}\left(\frac{d}{2f_r}\right) < \theta_t \leq 2 \tan^{-1}\left(\frac{Nd + (N-1)p}{2f_r}\right) - 8A \sin\left(\frac{L}{c}\omega_s\right)$$

lorsque N est un nombre pair égal à 2m, où m est un nombre naturel ; et

$$2 \tan^{-1}\left(\frac{d+2p}{2f_r}\right) < \theta_t \leq 2 \tan^{-1}\left(\frac{Nd + (N-1)p}{2f_r}\right) - 8A\left(\frac{L}{c}\omega_s\right)$$

lorsque N est un nombre impair égal à 2m + 1, où m est un nombre naturel
où

$\omega_s$ est une vitesse angulaire de balayage sinusoïdale,
A est un angle de déviation mécanique maximal,
L est une distance de détection maximale,
$f_r$ est une longueur focale de l'élément optique récepteur de lumière (40),
d est une largeur de chacun des pixels récepteurs de lumière (51) dans la première direction,
p est une distance dans la première direction entre des pixels récepteurs de lumière (51) adjacents, c est la vitesse de la lumière,
$\theta_t$ est un angle de diffusion de lumière projetée, et
N est le nombre de réseaux de pixels (52) agencés le long d'une direction dans laquelle un décalage horizontal se produit dans l'élément récepteur de lumière (50) en raison d'un changement d'angle du déflecteur de lumière (30).

2.  Détecteur d'objets (2) selon la revendication 1,

dans lequel le déflecteur de lumière (30) a une vitesse angulaire de balayage sinusoïdale, et une longueur focale $f_r$ de l'élément optique récepteur de lumière (40) satisfait l'expression mathématique ci-dessous :

$$f_r \geq \frac{P_{limit}}{W} \frac{1}{h\left\{\tan\left(\frac{\theta_t}{2} + 4A\sin\left(\frac{L+\Delta Z}{c}\omega_s\right)\right) - \tan\left(\frac{\theta_t}{2} + 4A\sin\left(\frac{L}{c}\omega_s\right)\right)\right\}}$$

où

$\Delta Z$ est une résolution de distance,
W est une densité de puissance du faisceau lumineux sur l'élément récepteur de lumière (50),
h est une hauteur du pixel récepteur de lumière,
$P_{limit}$ est une limite de détection de l'élément récepteur de lumière (50),
$\omega_s$ est une vitesse angulaire de balayage sinusoïdale,

A est un angle de déviation mécanique maximal,

L est une distance de détection maximale,

$f_r$ est une longueur focale de l'élément optique récepteur de lumière (40),

c est la vitesse de la lumière, et

$\theta_t$ est un angle de diffusion de lumière projetée.

3. Détecteur d'objets (2) comprenant :

un scanner optique (1) comportant :

une unité de source de lumière (11) conçue pour émettre un faisceau lumineux, et

un déflecteur de lumière (30) conçu pour dévier le faisceau lumineux émis par l'unité de source de lumière (11) afin de balayer un objet dans une région de détection avec le faisceau lumineux dévié ;

un élément optique récepteur de lumière (40) conçu pour collecter le faisceau lumineux renvoyé par l'objet par réflexion et/ou diffusion sur l'objet dans la région de détection en réaction au balayage avec le faisceau lumineux dévié par le déflecteur de lumière (30) ; et

un élément récepteur de lumière (50) conçu pour recevoir le faisceau lumineux collecté par l'élément optique récepteur de lumière (40), l'élément récepteur de lumière (50) comportant de multiples pixels récepteurs de lumière (51) agencés dans une première direction en différentes positions sur un plan perpendiculaire à l'axe optique ;

lesdits multiples pixels récepteurs de lumière (51) étant en outre agencés dans une deuxième direction croisant la première direction pour former un réseau de pixels (52) ;

**caractérisé en ce que** le déflecteur de lumière (30) satisfait les expressions mathématiques ci-dessous :

$$2 \tan^{-1}\left(\frac{d}{2f_r}\right) < \theta_t \le 2 \tan^{-1}\left(\frac{Nd + (N-1)p}{2f_r}\right) - 4\frac{L}{c}\omega_u$$

lorsque N est un nombre pair égal à 2m, où m est un nombre naturel ; et

$$2 \tan^{-1}\left(\frac{d + 2p}{2f_r}\right) < \theta_t \le 2 \tan^{-1}\left(\frac{Nd + (N-1)p}{2f_r}\right) - 4\frac{L}{c}\omega_u$$

lorsque N est un nombre impair égal à 2m + 1, où m est un nombre naturel,

où

$\omega_u$ est une vitesse angulaire de balayage constante,

L est une distance de détection maximale,

$f_r$ est une longueur focale de l'élément optique récepteur de lumière (40),

d est une largeur de chacun des pixels récepteurs de lumière (51) dans la première direction,

p est une distance dans la première direction entre des pixels récepteurs de lumière (51) adjacents,

c est la vitesse de la lumière,

$\theta_t$ est un angle de diffusion de lumière projetée, et

N est le nombre de réseaux de pixels (52) agencés le long d'une direction dans laquelle un décalage horizontal se produit dans les éléments récepteurs de lumière (50) en raison d'un changement d'angle du déflecteur de lumière (30).

4. Détecteur d'objets (2) selon la revendication 3,

dans lequel le déflecteur de lumière (30) a une vitesse angulaire de balayage constante, et une longueur focale $f_r$ de l'élément optique récepteur de lumière (40) satisfait l'expression mathématique ci-dessous :

$$f_r \geq \frac{P_{limit}}{W} \frac{1}{h\left\{\tan\left(\frac{\theta_t}{2} + 2\frac{L + \Delta Z}{c}\omega_u\right) - \tan\left(\frac{\theta_t}{2} + 2\frac{L}{c}\omega_u\right)\right\}}$$

où

$\Delta Z$ est une résolution de distance,
W est une densité de puissance du faisceau lumineux sur l'élément récepteur de lumière (50),
h est une hauteur du pixel récepteur de lumière, et
$P_{limit}$ est une limite de détection de l'élément récepteur de lumière (50),
$\omega_u$ est une vitesse angulaire de balayage constante,
L est une distance de détection maximale,
$f_r$ est une longueur focale de l'élément optique récepteur de lumière (40),
c est la vitesse de la lumière, et
$\theta_t$ est un angle de diffusion de lumière projetée.

5. Détecteur d'objets (2) selon l'une quelconque des revendications 1 à 4, dans lequel la deuxième direction est orthogonale à la première direction sur le plan perpendiculaire à l'axe optique.

6. Détecteur d'objets (2) selon l'une quelconque des revendications 1 à 5,

dans lequel une largeur de faisceau (Db) du faisceau lumineux collecté par l'élément optique récepteur de lumière (40) satisfait l'expression conditionnelle ci-dessous :

$$Db < d1 + d2 + p$$

où

d1 est une taille, dans la première direction, d'un premier pixel récepteur de lumière (51a) parmi les multiples pixels récepteurs de lumière (51),
d2 est une taille, dans la deuxième direction, d'un premier pixel récepteur de lumière (51b) parmi les multiples pixels récepteurs de lumière (51),
p est une distance, dans la première direction, entre le premier pixel récepteur de lumière (51a) et le deuxième pixel récepteur de lumière (51b), et
le premier pixel récepteur de lumière (51a) et le deuxième pixel récepteur de lumière (51b) sont adjacents l'un à l'autre dans la première direction.

7. Détecteur d'objets (2) selon l'une quelconque des revendications 1 à 6,

dans lequel l'élément récepteur de lumière (50) présente une structure de réseau bidimensionnelle dans laquelle les multiples pixels récepteurs de lumière (51) sont agencés de manière bidimensionnelle dans la première direction et dans une deuxième direction croisant la première direction, et
dans lequel une position ou une combinaison de pixels récepteurs de lumière (51) à actionner peuvent être sélectionnées.

8. Détecteur d'objets (2) selon l'une quelconque des revendications 1 à 7, comprenant en outre une unité de détection d'objets (21) conçue pour :

générer un signal de détection en fonction d'une intensité de lumière reçue par l'élément récepteur de lumière (50) ;
déterminer un temps de détection d'objet en fonction du signal de réception de lumière et d'un temps d'émission de lumière de l'unité de source de lumière (11) ; et
détecter l'objet en fonction du temps de détection d'objet et du temps d'émission de lumière de l'unité de la source de lumière (11).

**9.** Détecteur d'objets (2) selon la revendication 8,
dans lequel l'unité de détection d'objet (21) est en outre conçue pour calculer une quantité de changement concernant un angle de déviation du déflecteur de lumière (30) à partir d'une distribution de l'intensité de lumière reçue par les multiples pixels récepteurs de lumière (51) de l'élément récepteur de lumière (50).

**10.** Appareil de détection (3) comprenant :

le détecteur d'objets (2) selon l'une quelconque des revendications 1 à 9 ; et
un détecteur d'angle de déflecteur (4) conçu pour détecter en permanence ou périodiquement un changement d'angle du déflecteur de lumière (30) en fonction d'une réponse du détecteur d'objets (2) et d'un retour d'information vers le détecteur d'objets (2).

**11.** Appareil de détection (3) comprenant :

le détecteur d'objets (2) selon l'une quelconque des revendications 1 à 9 ; et
un moniteur (5) conçu pour obtenir des informations concernant l'objet en fonction d'une réponse du détecteur d'objets (2), les informations comprenant au moins l'une des suivantes : présence ou absence de l'objet, direction de mouvement de l'objet et vitesse de mouvement de l'objet.

**12.** Appareil de détection (3) selon la revendication 11,
dans lequel l'appareil de détection (3) est monté sur un véhicule (6), et le moniteur (5) est en outre conçu pour commander un déplacement du véhicule en fonction d'informations de position et/ou d'informations de mouvement de l'objet.

**13.** Objet mobile (6) comprenant le détecteur d'objets (2) selon l'une quelconque des revendications 1 à 9.

FIG. 1

FIG. 2

# FIG. 3

OBJECT DETECTOR

PROJECED BEAM ← **20** PROJECTION OPTICAL ELEMENT ← **10** LIGHT SOURCE ← **100** LIGHT SOURCE DRIVING CIRCUIT ← LIGHT SOURCE DRIVING SIGNAL

REFLECED BEAM → **40** RECEIVING OPTICAL ELEMENT → **50** LIGHT RECEIVING ELEMENT → **70** WAVEFORM PROCESSING CIRCUIT → DETECTION SIGNAL → **80** TIME MEASURING CIRCUIT → RESULT OF TIME MEASUREMENT → MEASUREMENT CONTROLLER

**2**
**21**
**90**

EP 4 020 004 B1

# FIG. 4

TARGET (OBJECT)

PROJECTED BEAM →

REFLECTED BEAM →

OBJECT
DETECTOR

2

L

$$t = \frac{2L}{c}$$

C : SPEED OF LIGHT

FIG. 5A

PRINCIPAL PLANE OF LIGHT
RECEIVING OPTICAL ELEMENT

FOCAL
POINT

f r

FIG. 5B

PRINCIPAL PLANE OF LIGHT
RECEIVING OPTICAL ELEMENT

$\theta r / 2$

d

$\theta r$

f r

**FIG. 6**

PRINCIPAL PLANE OF LIGHT
PROJECTION OPTICAL ELEMENT

$\theta t / 2$

OPTICAL AXIS (O)

$\theta t$

$d t$

10

$f t$

**FIG. 7**

OBJECT(TARGET)

30

30

DIFFERENCE IN DEFLECTION
ANGLE $\alpha$ BETWEEN
PROJECTION AND
RECEIVING IN LIGHT
DEFLECTOR 30

$2a$

FIG. 8B

AMOUNT OF HORIZONTAL
SHIFT OF REFLECTED BEAM

REFLECTED
BEAM

LIGHT
RECEIVING
PIXEL

t=2L/c

SHIFT
DETECTION
REGION

MAIN
REGION

SHIFT
DETECTION
REGION

FIG. 8A

REFLECTED
BEAM

LIGHT
RECEIVING
PIXEL

d2
d1
p

51b
51a
50
51
52

t=0

SHIFT
DETECTION
REGION

MAIN
REGION

SHIFT
DETECTION
REGION

# FIG. 9A

IN THE CASE OF N = 2m (m=1, 2, 3, ···)

MINIMUM SPREAD OF WIDTH
REFLECTED BEAM

RECEIVING PIXEL

50

51

51a

51b

52(54)   $d$   52(54)

# FIG. 9B

IN THE CASE OF N = 2m (m=1, 2, 3, ···)

MAXIMUM SPREAD WIDTH
OF REFLECTED BEAM

LIGHT
RECEIVING
PIXEL

$Nd+(N-1)p$

EP 4 020 004 B1

# FIG. 10A

IN THE CASE OF N = 2m+1 (m=1, 2, 3, ···)

MINIMUM SPREAD WIDTH OF REFLECTED BEAM

RECEIVING PIXEL

$p$

$d$

$d+2p$

50

51

51b

51a

52(54)  52(53)  52(54)

# FIG. 10B

IN THE CASE OF N = 2m+1 (m=1, 2, 3, ···)

MAXIMUM SPREAD WIDTH OF REFLECTED BEAM

RECEIVING PIXEL

$Nd+(N-1)p$

EP 4 020 004 B1

# FIG. 11

$$\theta_t/2$$

$$4A \sin \frac{L}{c} \omega_s$$

$$4A \sin \frac{L + \Delta Z}{c} \omega_s$$

$f_r$

PIXEL OF
MAIN REGION

PIXEL OF SHIFT
DETECTION
REGION

$\Delta d_{L+\Delta Z}$

$\Delta d_L$   $\Delta d_{\Delta Z}$

# FIG. 12

$$t = \frac{2(L + \Delta Z)}{c}$$

$$t = \frac{2L}{c}$$

REFLECTED
BEAM

SWEEPING AREA IN $\Delta t = \frac{2\Delta Z}{c}$

$h$

PIXEL OF SHIFT DETECTION REGION

$\Delta d_{L+\Delta Z}$

$\Delta d_L$   $\Delta d_{\Delta Z}$

# FIG. 13

FIG. 14

EP 4 020 004 B1

# FIG. 15

# FIG. 16

# FIG. 17

# FIG. 18

EP 4 020 004 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018151278 A
- JP 20152126472 A
- JP 2015212647 A
- JP 2011089874 A
- JP 2015021264 A
- US 2020249324 A1
- US 2019285734 A1